(19) Europäisches Patentamt / European Patent Office / Office européen des brevets

(11) **EP 1 758 233 B1**

(12) **EUROPEAN PATENT SPECIFICATION**

(45) Date of publication and mention
of the grant of the patent:
**03.08.2016 Bulletin 2016/31**

(21) Application number: **06118636.7**

(22) Date of filing: **09.08.2006**

(51) Int Cl.:
*H02M 1/00* *(2006.01)*      *H02M 1/12* *(2006.01)*
*H02M 7/06* *(2006.01)*      *H02M 1/42* *(2007.01)*

(54) **AC/DC converter**

Wechselstrom-Gleichstromumrichter

Convertisseur alternatif/continu

(84) Designated Contracting States:
**ES FR IT**

(30) Priority: **26.08.2005 JP 2005245626**

(43) Date of publication of application:
**28.02.2007 Bulletin 2007/09**

(73) Proprietor: **Panasonic Corporation**
**Kadoma-shi**
**Osaka 571-8501 (JP)**

(72) Inventor: **Takeda, Yoshihiko**
**Osaka-shi**
**Osaka 540-3619 (JP)**

(74) Representative: **Gill Jennings & Every LLP**
**The Broadgate Tower**
**20 Primrose Street**
**London EC2A 2ES (GB)**

(56) References cited:
**JP-A- 2002 369 530**     **US-A- 5 933 336**

• LI Y ET AL: "A novel three-phase
zero-current-transition and quasi-zero-voltage
transition (ZCT-QZVT) inverter/rectifier with
reduced stresses on devices and components"
APPLIED POWER ELECTRONICS CONFERENCE
AND EXPOSITION, 2000. APEC 2000. FIFTEENTH
ANNUAL IEEE NEW ORLEANS, LA, USA 6-10
FEB. 2000, PISCATAWAY, NJ, USA,IEEE, US, vol.
2, 6 February 2000 (2000-02-06), pages 1030-1036,
XP010371653 ISBN: 978-0-7803-5864-5

**Description**

The present invention relates to a power supply that converts three-phase alternating current power into direct current while reducing a harmonic current flowing through a three-phase alternating current power source to enhance an input power factor.

As a conventional power supply for converting three-phase alternating current (referred to as "AC" hereinafter) into direct current (referred to as "DC" hereinafter), there has widely and generally been used a power supply as a basic one that includes a diode bridge composed of six diodes in combination with DC reactors provided at its DC output side, performing three-phase full-wave rectification. However, the power supply of such a simple type cannot enhance a power factor more than a predetermined level, and an adverse effect on a system due to a generated harmonic current has become a problem. From the viewpoint of this, a power supply has been developed in which current of the three-phase AC power source is brought near to a sine wave to be converted into a direct current, in order to improve a power factor and reduce a harmonic current.

The power supply as described above employs in most cases a system in which a switching device is driven at several kilohertz to ten odd kilohertz for causing the current flowing through the switching device to follow a target reference sine waveform through a high-speed control to the current. However, it entails problems of increase in number of components, complicated control means, generation of noise, increase in cost, and the like.

On the other hand, a power supply without utilizing a switching device employs a system in which an AC reactor is inserted at an AC input side as a popular means for enhancing a power factor and reducing a harmonic current. However, it is necessary to set the inductance of the AC reactor to several ten millihenries in order to correspond to a foreign harmonic current regulation. In this case, there arises problems that the DC current greatly reduces as increase in a load amount and that the input power factor becomes a delay power factor and is deteriorated. Therefore, the applicable range is limited.

In view of this, a power supply (hereinafter referred to as "high power factor power supply") has recently been proposed that can realize a simplification of a circuit and reduced cost for a power supply having a switching device, preventing reduction in DC current and deterioration in power factor under a heavy load compared to mere application of an AC reactor, and allowing to reduce a harmonic current.

As an example of a high power factor power supply aiming to enhance a power factor and reduce a harmonic current in combination with a conventional passive component, there is a power supply as disclosed in e.g., Japanese Unexamined Patent Application No. 2002-369530 (referred to as "patent reference 1", hereinafter). This power supply includes a diode bridge composed of six diodes which are connected to a three-phase AC power source, three capacitors each connected in parallel to each of the three diodes at the output side of positive polarity of the diode bridge, and three reactors interposed between the AC input terminals of the diode bridge and the three-phase AC power source to form, with the three capacitors, a resonance circuit having a frequency equal to a frequency of the three-phase AC power source.

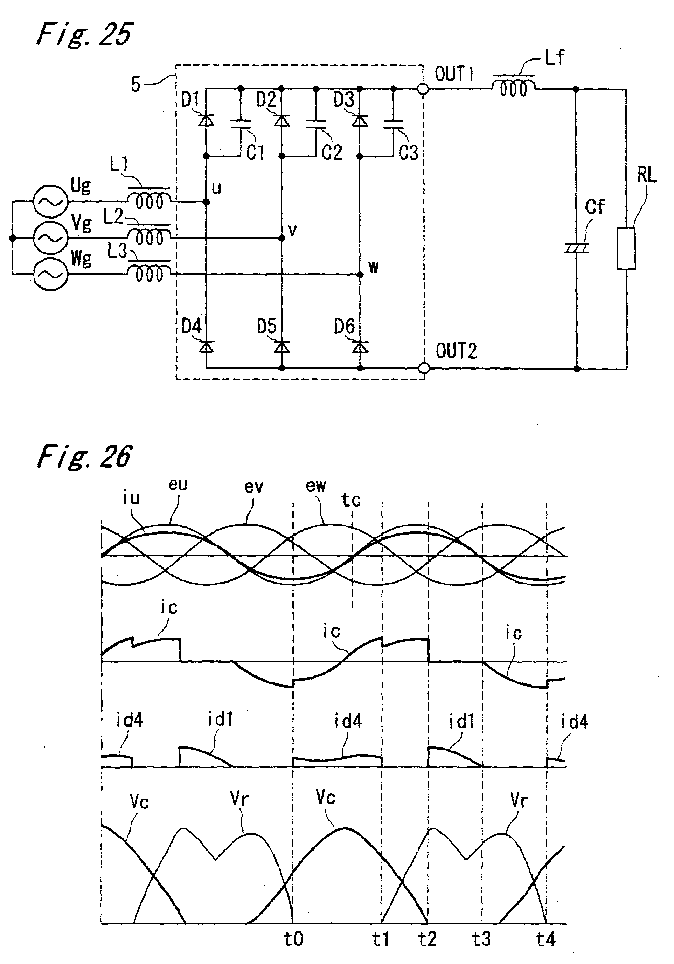

A conventional high power factor power supply will be explained with reference to drawings. FIG. 25 is a diagram of the conventional high power factor power supply disclosed in the patent reference 1 that can obtain DC power from a three-phase AC power source. A diode bridge 5 of this high power factor power supply is composed of three diodes D1, D2 and D3 provided at the positive-polarity output side and three diodes D4, D5 and D6 provided at the negative-polarity output side. Capacitors C1, C2 and C3 are respectively connected in parallel to the diodes D1, D2 and D3 at the positive-polarity output side.

A first reactor L1 is interposed in series between a U-phase power source Ug of the three-phase AC power source 1 having three phases of U-phase. V-phase, and W-phase and a first power input terminal u of the diode bridge 5. The terminal u is a connection point between an anode of the diode D1 and a cathode of the diode D4. Similarly, a second reactor L2 is interposed between a V-phase power source Vg and a second power input terminal v which is a connection point between an anode of the diode D2 and a cathode of the diode D5, and a third reactor L3 is interposed between a W-phase power source Wg and a third power input terminal w which is a connection point between an anode of the diode D3 and a cathode of the diode D6.

The positive-polarity output side of the diode bridge 5 is connected to an output terminal OUT1, and the negative-polarity output side thereof is connected to an output terminal OUT2. It is to be noted that, when the output terminal OUT2 is grounded, the DC voltage of the power supply becomes positive voltage. The DC voltage is smoothed by, for example, a smoothing circuit composed of a reactor Lf and a capacitor Cf, and is supplied to a load resistor RL.

In the high power factor power supply thus configured, each of the phase currents iu, iv, and iw flowing through the power input terminals u, v, and w by the phase power sources Ug, Vg, and Wg is made into a sine wave, regardless of rectification by the diodes D1 to D6. The operation of obtaining a sine wave from the current will be explained, citing the U-phase as an example.

FIG. 26 is a waveform chart for explaining the current flowing through the first power input terminal u of the diode bridge 5, diodes D1 and D4, and the capacitor C1 by the U-phase power source Ug, and a power waveform of the three-phase AC power source 1.

FIGS. 27(a) to 27(e) are views for explaining the U-phase current iu by the U-phase power source Ug. Each of the output voltages of the phase power sources Ug, Vg, and Wg (hereinafter referred to as "U-phase voltage eu, V-phase voltage ev, W-phase voltage ew") are defined as follows:

$$eu = Em \times \sin\omega t$$

$$ev = Em \times \sin(\omega t - 2\pi/3)$$

$$ew = Em \times \sin(\omega t - 4\pi/3)$$

It is to be noted that Em is the maximum voltage of each phase voltage, the unit of the angle is radian, $\omega$ is an angular frequency of the three-phase AC power source 1, and t is a time.

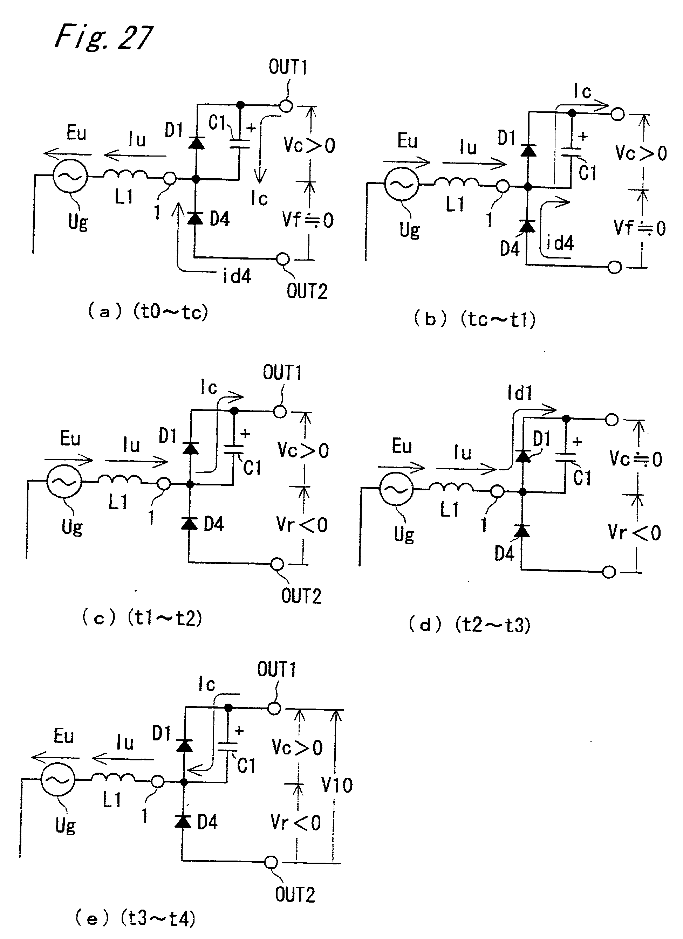

As shown in FIG. 26, it is supposed that the relationship of the U-phase voltage eu, V-phase voltage ev, W-phase voltage ew is established such that the U-phase voltage eu is negative, V-phase voltage ev is positive, and W-phase voltage ew is positive, and the time when the U-phase voltage eu becomes generally the negative maximum value is time t0. Accordingly, as shown in FIG. 27(a), the diode D4 is turned on, so that the current id4 flows from the negative-polarity output side. The forward-direction voltage drop Vf of the diode D4 is assumed to be generally zero volt.

On the other hand, the diode D1 is cut off, and the absolute-value current Ic (hereinafter, the current Ic indicates the absolute value of the current ic) flows through the capacitor C1 from the positive-polarity output side as the charging current. Thus, the capacitor C1 is charged by a positive voltage of the terminal connected to the positive-polarity output side. Therefore, the current id4 and the current ic become the U-phase current iu flowing toward the U-phase power source Ug from the power input terminal u via the reactor L1, wherein the absolute value Iu of the U-phase current iu (hereinafter, the U-phase current Iu indicates the absolute value of the U-phase current iu) is represented by:

$$Iu = id4 + Ic \qquad (1)$$

In order to clarify the direction of the flow of the current, the U-phase current iu and the current ic of the capacitor C1 are represented by their absolute values. Further, the absolute-value of the U-phase voltage eu is defined as a voltage Eu. The current or the like represented by the absolute value is for clarifying the direction of the flow of the current or the like.

The charging voltage of the capacitor C1 is defined as a voltage Vc. The capacitor C1 has already been in a charged state before time t0 as to be described later, and after time t0, the capacitor C1 is further charged with the current Ic, so that the voltage Vc rises up to its maximum value. When the U-phase voltage eu is changed to be positive after that, the current Ic changes from the charging current to a discharging current as shown in FIG. 27(b). The U-phase current Iu at this time is represented by:

$$Iu = Ic - id4 \qquad (2)$$

The V-phase voltage ev is lower than the U-phase voltage eu at the time when the current Ic is changed to the discharging current from the charging current (this time is defined as tc) as shown in FIG. 26, so that the diode D5 to which the V-phase voltage ev is applied is soon turned on. Then, the current id4 flowing through the diode D4 flows through the diode D5, resulting in that the diode D4 is cut off. As described above, the time when the diode D4 is cut off is time t1. At this time, the voltage between the anode and the cathode of the diode D4 becomes a reverse-direction voltage. Supposing that the reverse-direction voltage is defined as Vr, the reverse-direction voltage Vr is negative.

Thus, a resonance current resonating with the power frequency flows through the resonance circuit composed of the reactor L1 and the capacitor C1 during the period from time t0 to time t1 (hereinafter, the resonance circuit resonating with the power frequency is referred to as "resonance circuit"). After the time t1, the diode D4 is cut off and the current Ic already becomes the discharging current of the voltage Vc of the capacitor C1 as described above. In a period until the capacitor C1 is fully discharged, the diode D1 connected in parallel to the capacitor C1 having a positive voltage at the cathode is cut off as shown in FIG. 27(c). Therefore, the U-phase current Iu and the current Ic are equal to each other during this period, whereby the following equation is established.

$$Iu = Ic \qquad (3)$$

After the capacitor C1 is fully discharged, the diode D1 is turned on, and the current id1 flows therethrough. The time when the diode D1 is turned on is time t2.

On the other hand, during the period from time t1 to time t2, the reverse-direction voltage Vr of the diode D4 gradually rises from 0V with the drop of the voltage Vc due to the discharge of the capacitor C1. Thus, the resonance current flows through the resonance circuit composed of the reactor L1 and the capacitor C1 during the period from time t1 to time t2.

When the capacitor C1 is fully discharged and the current id1 flows through the diode D1 as described above (after time t2), the voltage Vc (equal to the forward-direction voltage drop Vf of the diode D1) becomes generally zero volt. At this time, the U-phase current Iu and the absolute value Id1 of the current are made equal to each other (hereinafter, the current Id1 represents the absolute value of the U-phase current id1), i.e., the following equation is established.

$$Iu = Id1 \qquad (4)$$

Thus, the U-phase current iu (current id1) is supplied to the load from the output terminal OUT1. The polarity of the U-phase current iu is soon reversed, and the time when the polarity is reversed is defined as time t3.

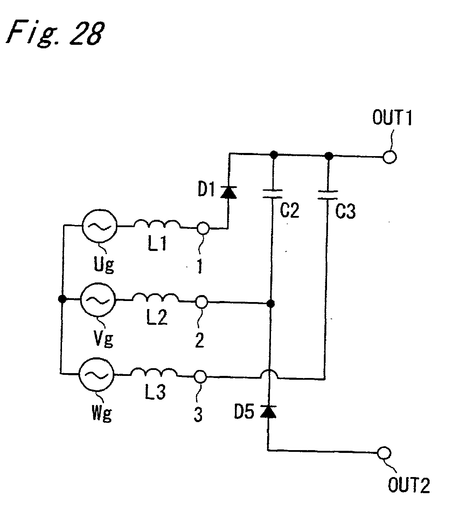

As described above, the reactor L1 does not compose a resonance circuit with the capacitor C1 during the period from time t2 to time t3. However, as the diode bridge 5, the reactor L2 and the capacitor C2 in the V-phase and the reactor L3 and the capacitor C3 in the W-phase are acted as the resonance circuits as shown in FIG. 28, so that the resonance current of each of the V-phase and W-phase (the current flowing from the power input terminals v and w) flows through the power input terminal u through the reactor L1.

Thus, the resonance current flows through the reactor L1 during the period from time t2 to time t3. It is to be noted that the diodes in the cut off state are not shown and the diodes in the turned on state are only shown in FIG. 28. The capacitor C1 does not act as a capacitor since the diode D1 is in the turned on state, the capacitor C1 is omitted from the figure.

The polarity of the U-phase current iu is reversed and the diode D1 is cut off at time t3, and even after time t3, the diode D4 is not yet turned on. Therefore, the (charging) current ic flows through the capacitor C1 toward the power input terminal u, resulting in that the voltage Vc rises. This current becomes the U-phase current iu. Accordingly, the U-phase current Iu and the current Ic are made equal to each other during this period, so that the following equation is established.

$$Iu = Ic \qquad (5)$$

On the other hand, the reverse-direction voltage Vr is applied to the diode D4 after time t1. Supposing that the DC voltage generated at the output terminals OUT1 and OUT2 is defined as V10, the following equation is established.

$$V10 = Vc + Vr$$

The DC voltage V10 is the voltage having the highest absolute value of each of the instant voltage generated at the power input terminals u, v and w by the U-phase voltage eu, V-phase voltage ev and W-phase voltage ew. Therefore, the DC current V10 is the voltage linked to (related to) not only the U-phase voltage eu but also the V-phase voltage ev and W-phase voltage ew.

The reverse-direction voltage Vr that cuts off the diode D4 temporarily rises as linked to the V-phase voltage ev and the W-phase voltage ew, but it soon drops to zero volt with the rise of the voltage Vc and the drop of the DC current V10, and the polarity of the voltage between the anode and the cathode of the diode D4 is reversed to turn on the diode D4. The time when the diode D4 is turned on is defined as time t4. At this time, the capacitor C1 is continuously charged with the current ic.

Thus, the resonance current flows through the resonance circuit composed of the reactor L1 and the capacitor C1 during the period from time t3 to time t4. The operation state of the diode bridge 5 at time t4 is equal to the operation state of the diode bridge 5 at time t0, so that the capacitor C1 already in the charged state at time t0 as described above. In this manner, the diode bridge 5 repeats the aforesaid operation of the period from time t0 to time t4.

As described above, in the conventional power supply, the U-phase current iu is made into a sine waveform by the resonance circuit, and similarly, the V-phase current and W-phase current are made into sine waveforms, and thus the harmonic current can be reduced. Further, it is possible to make the input power factor approximately 1 upon the rated load by appropriately selecting the inductance of the reactors L1 to L3 and the constants of the capacitors C1 to C3 depending upon the load capacity.

However, in this conventional configuration, when the constants of the capacitors connected in parallel to the reactors and diodes are selected in order that the input power factor takes a maximum value more than 99 % upon the rated load, the input power factor falls below 90 % upon the load of 50 % in most cases. This is caused by the influence of the phase-advance current of the capacitors. Accordingly, it does not matter in case where the power supply is always driven under the rated load, but this is unfavorable in case where the power supply is generally driven with a load factor of not more than 50 %. In order to reduce the harmonic current so as to adapt to the IEC harmonic current regulation and increase the input power factor to 99 % or more, the inductance of the used reactor is increased, which arises problems, in the outer dimension of the whole circuit, weight, and cost.

"A novel three-phase zero current transition and quasi-zero voltage transission (ZCT-QZVT) inverter/rectifier with reduced stresses on devices and components" Applied Power Electronics Conference, IEEE, volume 2, 6 February 2000, pages 1030 to 1036, discloses a soft-switching strategy for three-phase inverter and rectifier applications. US-A-5933336 discloses a three-phase boost converter with multiple L-C branches.

The present invention is accomplished to solve the aforesaid conventional problems, and aims to hold the reduction in the input power factor within 5 % upon the load factor of 50 % even if a constant of each component is selected in order that the input power factor upon the rated load becomes 99 % or more, and to reduce the inductances of the reactors by 30 % compared to the conventional circuit, which achieves both the improvement in the input power factor and reduction in harmonic current, thereby reducing the whole size, weight, and cost.

In order to solve the aforesaid conventional problems, a power supply according to the present invention has a three-phase AC power source, a first diode bridge connected to the three-phase AC power source via a reactor, second and third diode bridges, which are connected in series and also connected in parallel to the DC output of the first diode bridge, and capacitors between AC input terminals of the first diode bridge and AC input terminals of the second and third diode bridges. By this configuration, the harmonic current can be reduced and the input power factor can be improved with a simple configuration.

The power supply according to the present invention has a simple configuration having two diode bridges and six capacitors connected thereto in addition to the configuration of the basic three-phase full-wave rectification circuit using three reactors and one diode bridge. Accordingly, the power supply of the present invention can reduce harmonic current by making the input current into a sine waveform, and can improve an input power factor. Compared to the conventional high power factor power supply, the power supply of the present invention can downsize the reactor and can suppress the reduction of the input power factor upon a light load.

In the drawings:

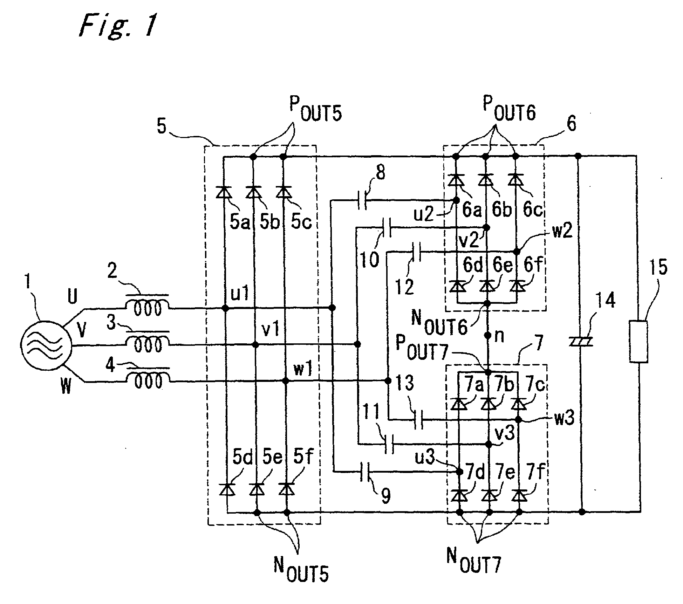

FIG. 1 is a circuit diagram of a power supply according to a first embodiment of the present invention.

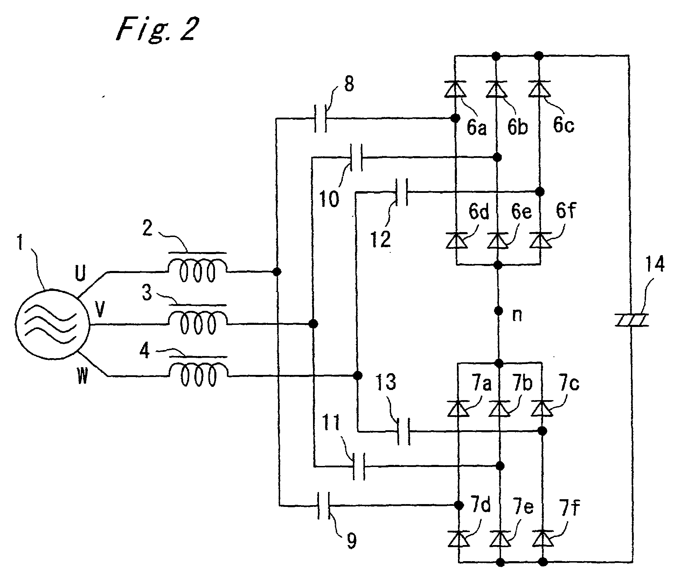

FIG. 2 is an explanatory view of components that contribute to improvement in an input power factor according to the first embodiment of the present invention.

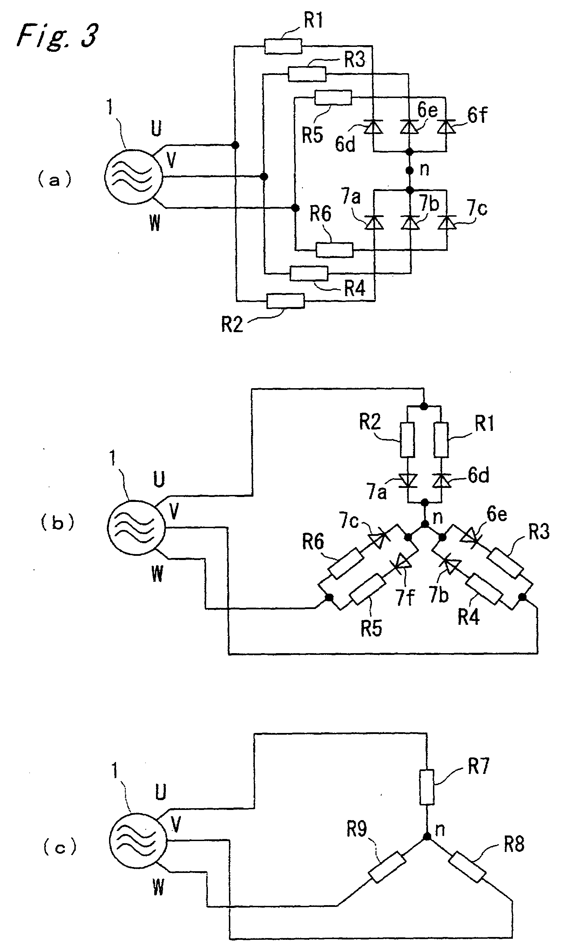

FIGS. 3(a) to 3(c) are equivalent circuit diagrams for explaining a principle of the improvement in the input power factor according to the first embodiment of the present invention.

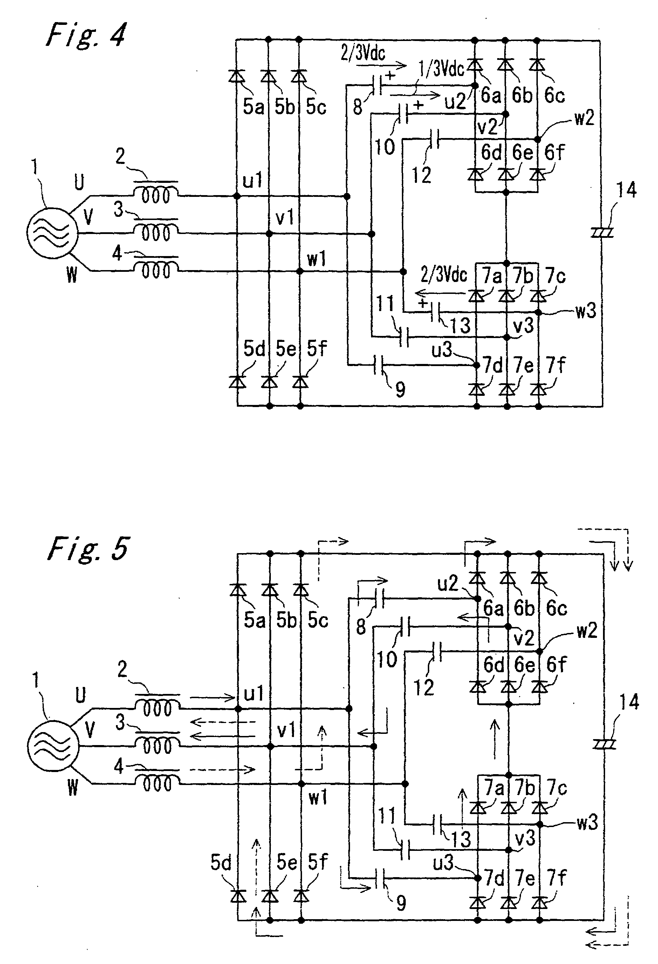

FIG. 4 is a voltage distribution view of capacitors at an initial state according to the first embodiment of the present invention.
FIG. 5 is an explanatory view of a current path during a period T1 according to the first embodiment of the present invention.

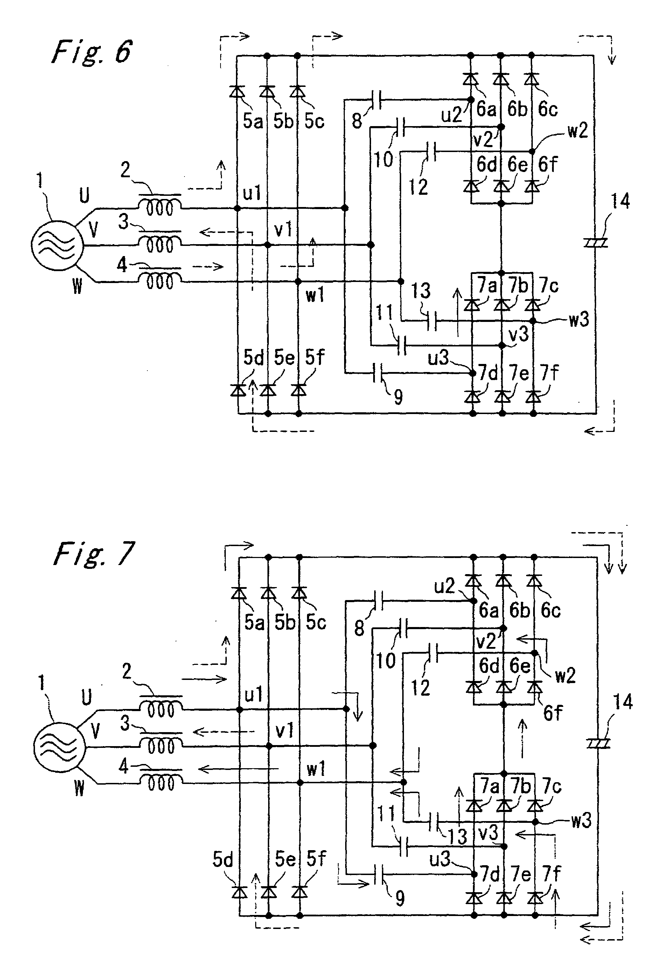

FIG. 6 is an explanatory view of a current path during a period T2 according to the first embodiment of the present invention.
FIG. 7 is an explanatory view of a current path during a period T3 according to the first embodiment of the present invention.

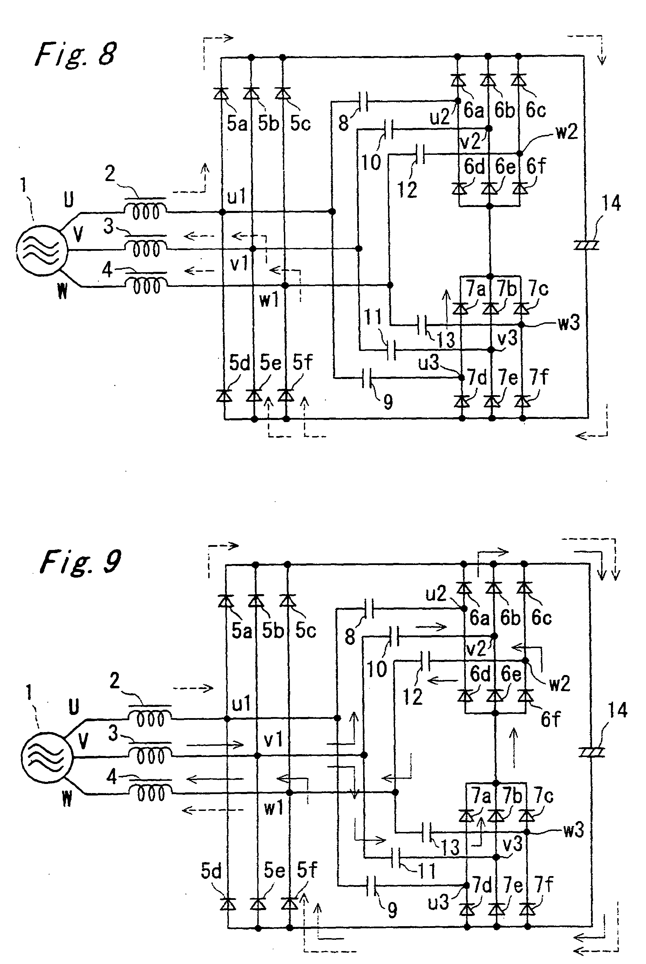

FIG. 8 is an explanatory view of a current path during a period T4 according to the first embodiment of the present invention.

FIG. 9 is an explanatory view of a current path during a period T5 according to the first embodiment of the present invention.

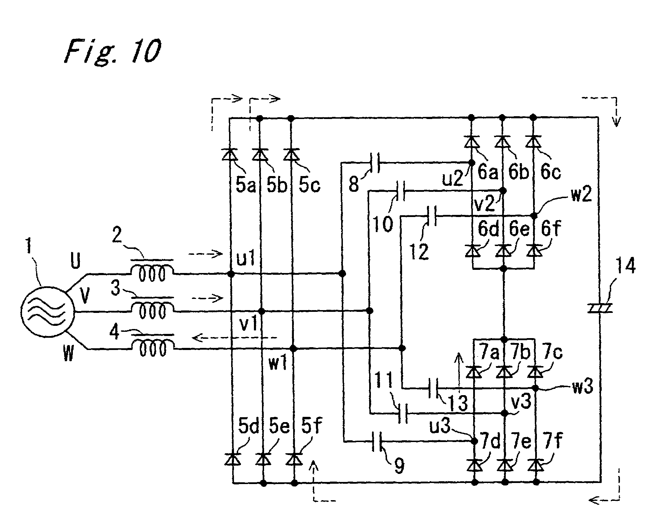

FIG. 10 is an explanatory view of a current path during a period T6 according to the first embodiment of the present invention.

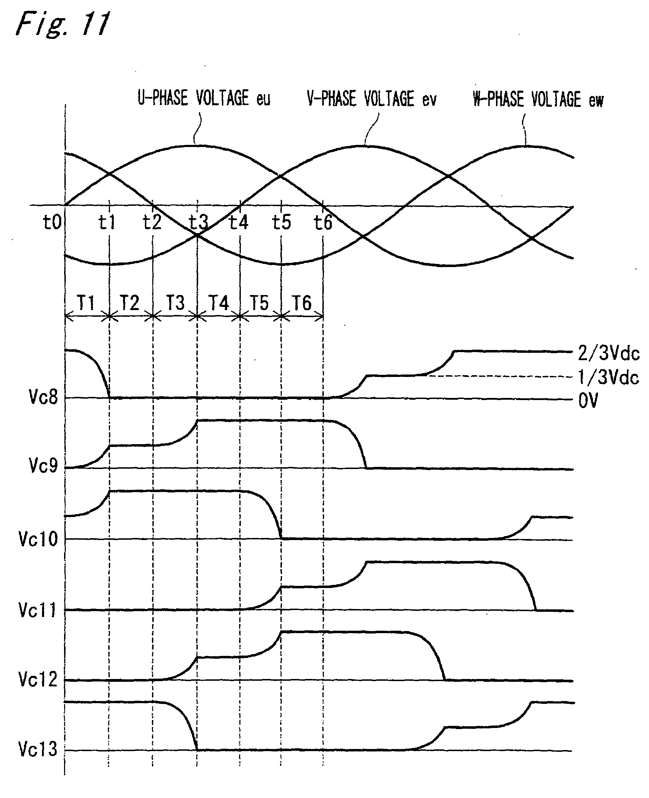

FIG. 11 is a waveform chart of an input voltage and voltage of capacitors according to the first embodiment of the present invention.

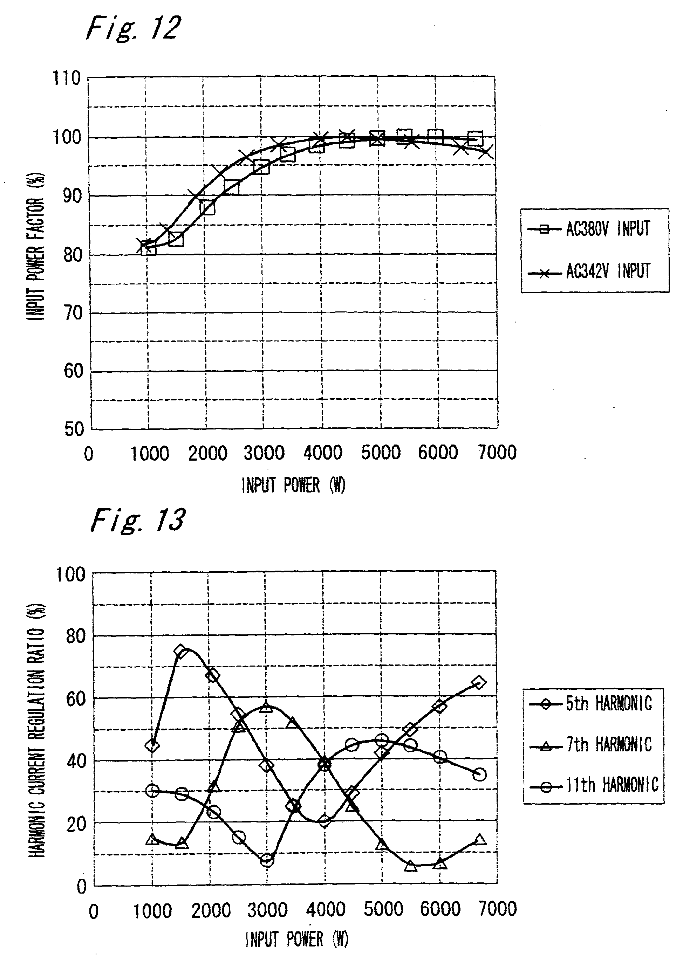

FIG. 12 is a characteristic view of an input power factor to the input power according to the first embodiment of the present invention.
FIG. 13 is a characteristic view of a harmonic current to the input power according to the first embodiment of the present invention.

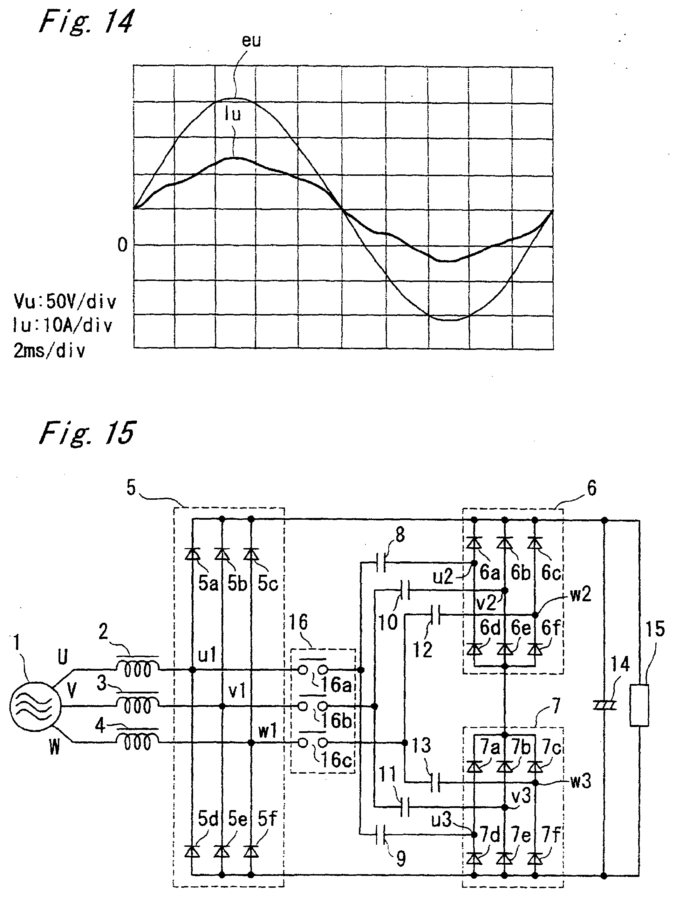

FIG. 14 is a waveform chart of an input voltage and input current upon the rated load according to the first embodiment of the present invention.
FIG. 15 is a circuit diagram of a power supply according to a second embodiment of the present invention.

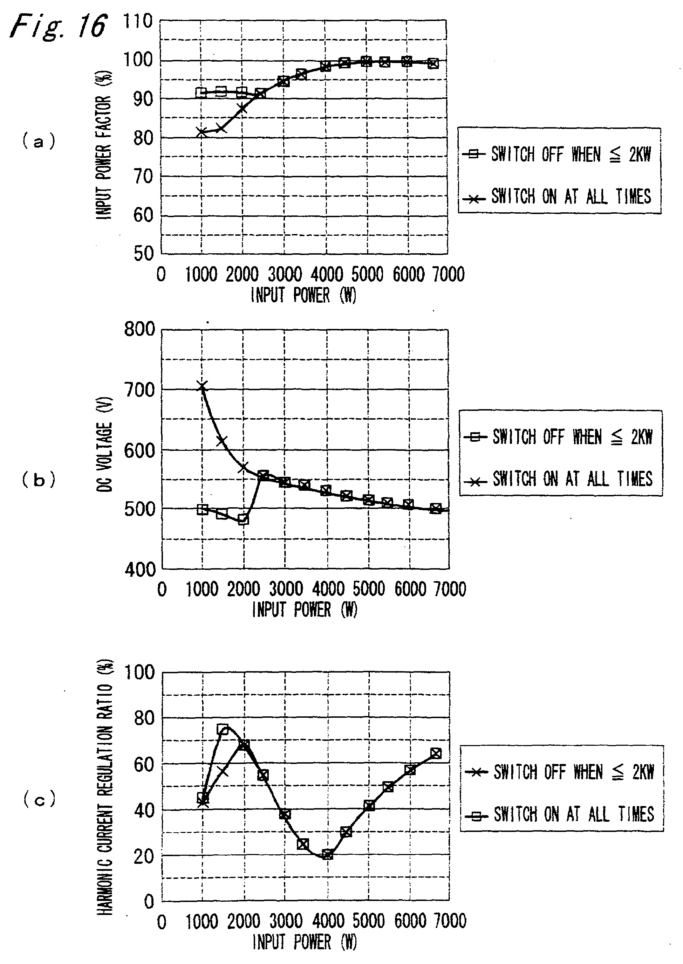

FIGS. 16(a) to 16(c) are views showing an operation of switching means and a change in various characteristics according to the second embodiment of the present invention.

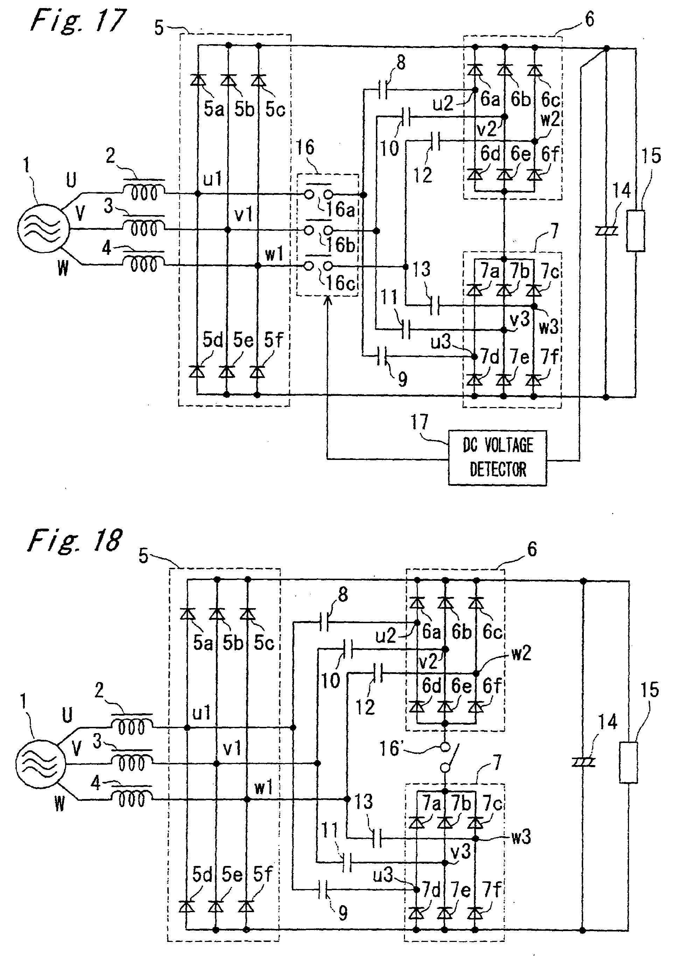

FIG. 17 is a circuit diagram of a power supply according to a third embodiment of the present invention.
FIG. 18 is a circuit diagram of a power supply according to a fourth embodiment of the present invention.

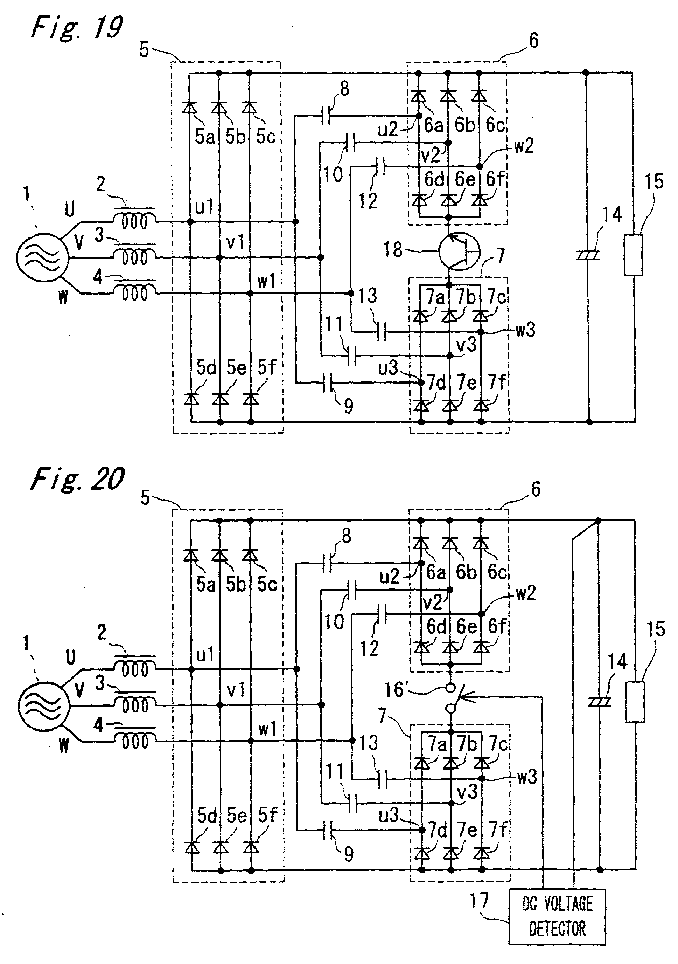

FIG. 19 is a circuit diagram using a semiconductor device according to the fourth embodiment of the present invention.
FIG. 20 is a circuit diagram using DC voltage detecting means according to the fourth embodiment of the present invention.

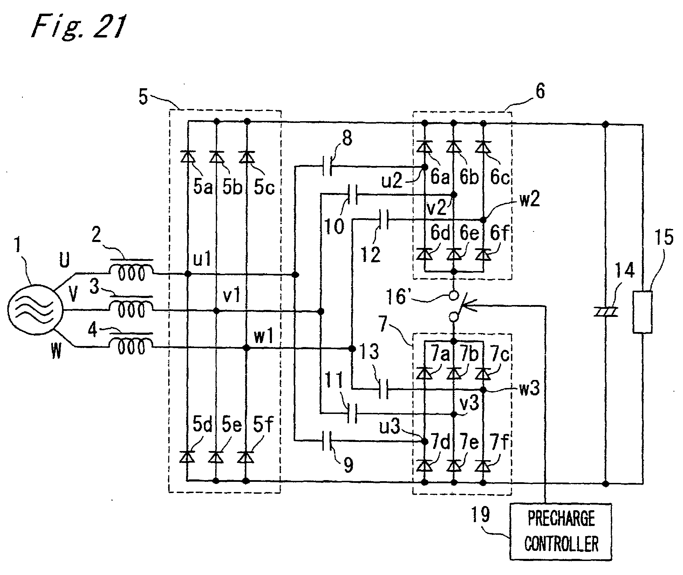

FIG. 21 is a circuit diagram of a power supply according to a fifth embodiment of the present invention.

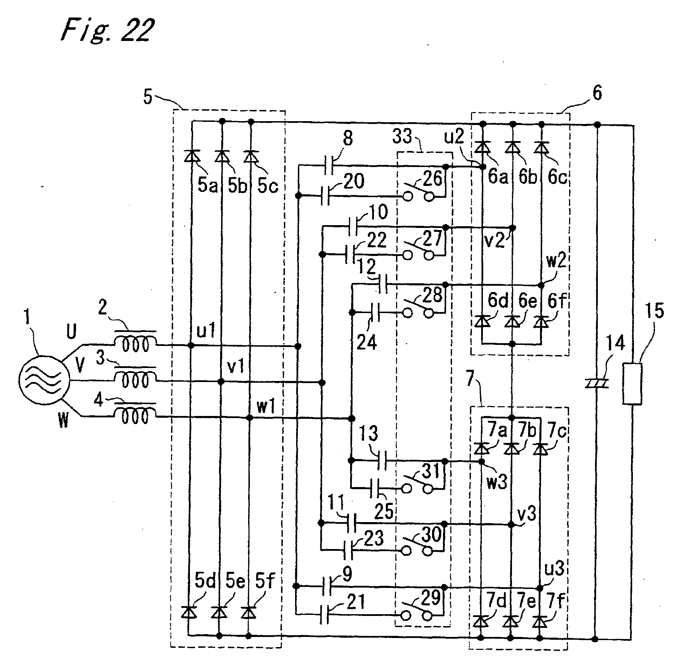

FIG. 22 is a circuit diagram of a power supply according to a sixth embodiment of the present invention.

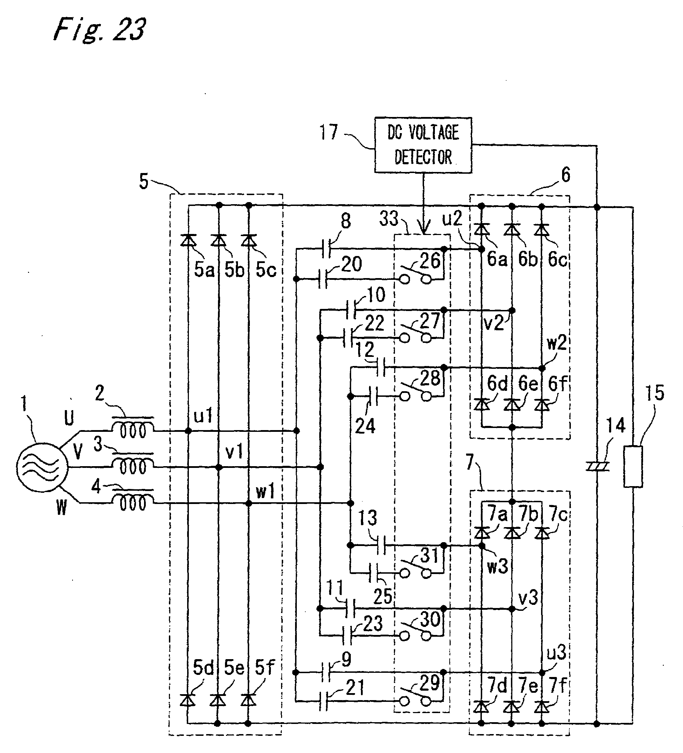

FIG. 23 is a circuit diagram of a power supply according to a seventh embodiment of the present invention.

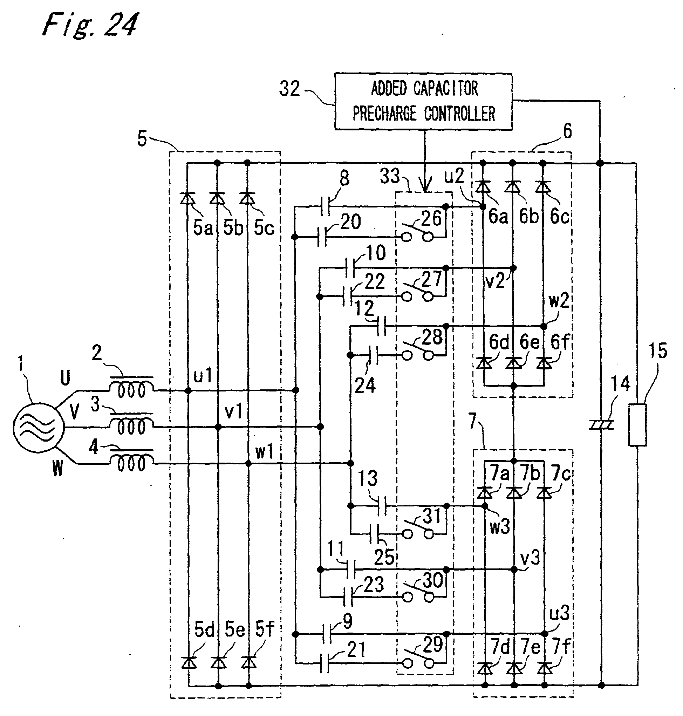

FIG. 24 is a circuit diagram of a power supply according to an eighth embodiment of the present invention.
FIG. 25 is a circuit diagram of a conventional power supply.
FIG. 26 is a waveform chart of each part of the conventional power supply.
FIGS. 27(a) to 27(e) are explanatory views of a current path of the conventional power supply.
FIG. 28 is an equivalent circuit diagram in which a cutout diode is omitted from the conventional power supply.

In a first aspect of the present invention, a power supply comprises a three-phase AC power source; a first diode bridge comprised of six diodes each of which is connected to the three-phase AC power source via a reactor; a second diode bridge comprised of six diodes, having a positive-polarity output terminal commonly connected to a positive-polarity output terminal of the first diode bridge; a third diode bridge comprised of six diodes, having a negative-polarity output terminal commonly connected to a negative-polarity output terminal of the first diode bridge and having a positive-polarity output terminal connected to a negative-polarity output terminal of the second diode bridge. The power supply further comprises total six capacitors of which the three capacitors of the first group are connected between AC input terminals of the first diode bridge and AC input terminals of the second diode bridge respectively every three phases, and of which the three capacitors of the second group are connected between the AC input terminals of the first diode bridge and AC input terminals of the third diode bridge respectively every three phases. This can reduce a harmonic current and improve an input power factor.

In a second aspect of the invention, the power supply as defined in the first aspect may further comprise a first switching means which is provided between the AC input terminals of the first diode bridge and the six capacitors. This configuration makes it possible to change between an operation as a three-phase full-wave rectification power supply and an operation as a high power factor power supply.

In a third aspect of the invention, the power supply as defined in the first aspect may further comprise a second switching means which is provided at a junction between the second diode bridge and the third diode bridge. This configuration makes it possible to perform the changeover of an operation as a three-phase full-wave rectification power supply and an operation as a high power factor power supply at a single point.

In a fourth aspect of the invention, the second switching means as defined in the third aspect may be composed of a single polar semiconductor device which can control current flowing only in one direction. In this configuration, the polar semiconductor device can be comprised of, for example, a transistor, thyristor, FET, diode or the like. This configuration makes it possible to perform the changeover of the operation as a three-phase full-wave rectification power supply and the operation as a high power factor power supply at a single point with high speed, and can solve a problem of a mechanical life as the switching means.

In a fifth aspect of the invention, the power supply as defined in any one of the second to fourth aspects may further comprise DC voltage detecting means for detecting a DC voltage applied to a load from the three-phase AC power source and controlling a switching operation of the first or second switching means based on the detected DC voltage. This configuration makes it possible to reduce harmonic current and improve an input power factor upon a normal driven state, and to prevent the rise in the DC voltage upon the light load, and to prevent the reduction in the input power factor and increase in the harmonic current involved therewith.

In a sixth aspect of the invention, the power supply as defined in any one of the second to fourth aspects may further comprise input current detecting means for detecting a current applied to a load from the three-phase AC power source and controlling a switching operation of the first or second switching means based on the detected input current. This configuration makes it possible to reduce harmonic current and improve an input power factor upon a normal driven state, and to prevent the rise in the DC voltage upon the light load, and to prevent the reduction in the input power factor and increase in the harmonic current involved therewith.

In a seventh aspect of the invention, the power supply as defined in any one of the second to fourth aspects may further comprise output power detecting means for detecting an output power applied to a load from the three-phase AC power source and controlling a switching operation of the first or second switching means based on the detected output power. This configuration makes it possible to reduce harmonic current and improve an input power factor upon a normal driven state, and to prevent the rise in the DC voltage upon the light load, and to prevent the reduction in the input power factor and increase in the harmonic current involved therewith.

In an eighth aspect of the invention, the power supply as defined in any one of the second to fourth aspects may further comprise DC current detecting means for detecting a DC current flowing through a load and controlling a switching operation of the first or second switching means based on the detected DC current. This configuration makes it possible to reduce harmonic current and improve an input power factor upon a normal driven state, and to prevent the rise in the DC voltage upon the light load, and to prevent the reduction in the input power factor and to prevent the increase in the harmonic current involved therewith.

In a ninth aspect of the invention, the power supply as defined in any one of the second to eighth aspects may further comprise precharge control means for controlling a current flowing to the six capacitors when the first or second switching means is turned on. This configuration makes it possible to prevent the generation of excessive current flowing through the capacitor when the switching means is turned on.

In a tenth aspect of the invention, the power supply as defined in any one of the first to ninth aspects may further comprise six added capacitors and added capacitor switching means for switching on and off the added capacitors, wherein said added capacitors are respectively connected in parallel to the six capacitors via said added capacitor switching means.

In an eleventh aspect of the invention, the power supply as defined in the tenth aspect may further comprise DC voltage detecting means for detecting a DC voltage applied to a load from the three-phase AC power source and controlling a switching operation of the added capacitor switching means based on the detected DC voltage. This configuration makes it possible to prevent the reduction in the DC voltage and the reduction in the input power factor upon a heavy load.

In a twelfth aspect of the invention, the power supply as defined in the tenth aspect may further comprise input current detecting means for detecting a current applied to a load from the three-phase AC power source and controlling a switching operation of the added capacitor switching means based on the detected input current. This configuration makes it possible to prevent the reduction in the DC voltage and the reduction in the input power factor upon a heavy load.

In a thirteenth aspect of the invention, the power supply as defined in the tenth aspect may further comprise output power detecting means for detecting an output power applied to a load from the three-phase AC power source and controlling a switching operation of the added capacitor switching means based on the detected output power. This configuration makes it possible to prevent the reduction in the DC voltage and the reduction in the input power factor upon a heavy load.

In a fourteenth aspect of the invention, the power supply as defined in the tenth aspect may further comprise DC current detecting means for detecting a current flowing through a load and controlling a switching operation of the added capacitor switching means based on the detected DC current. This configuration makes it possible to prevent the reduction in the DC voltage and the reduction in the input power factor upon a heavy load.

In a fifteenth aspect of the invention, the power supply as defined in any one of the tenth to fourteenth aspects may further comprise precharge control means for controlling the current flowing through the added capacitors when the added capacitor switching means is turned on. This configuration makes it possible to prevent the generation of excessive current flowing through the added capacitors when the added capacitor switching means is turned on.

In a sixteenth aspect of the invention, the power supply as defined in any one of the first to fifteenth aspects may have saturation characteristics such that, when the current flowing through the reactors becomes not less than a prescribed value, the inductance of the reactors reduces in accordance with the current. This configuration makes it possible to prevent the reduction in the DC voltage upon a heavy load.

In a seventeenth aspect of the invention, each of the reactors as defined in any one of the first to sixteenth aspects may be a three-phase reactor having a single core and three legs thereof and a coil provided around each of the legs. This configuration makes it possible to provide reduction in size and weight of the reactor.

The embodiments of the present invention will be explained hereinafter with reference to the drawings.

The components same as those in the conventional example are identified with the same numerals, and the detailed explanation are omitted. The present invention provides a power supply according to clam 1. Preferred embodiments are defined in the dependent claims.

FIG. 1 shows a circuit construction of a power supply according to the first embodiment of the present invention.

In the power supply shown in FIG. 1, a three-phase alternate current power source 1 is a power source for commercial use, and U, V and W phase terminals are respectively connected to reactors 2, 3 and 4. The reactors are respectively connected to AC input terminals u1, v1, w1 of a first diode bridge 5 which is comprised of six diodes. It is noted here that, in the following description, the term "diode bridge" means a "bridge rectifying circuit", and output terminals of the three-phase alternate current power source 1 are simply referred to as "U-phase, V-phase and W-phase", and also the terms "line voltage" between the output terminals of the three-phase alternate current power source 1 is simply referred to "UV voltage", "VW voltage", and "WU voltage".

The first diode bridge 5 is comprised of six diodes 5a to 5f and the three diodes 5a to 5c of them are positioned at a positive-polarity output terminal side $P_{OUT5}$ and the other three diodes 5d to 5f of them are positioned at a negative-polarity output terminal side $N_{OUT5}$ of the first diode bridge 5, respectively corresponding to the three phases U, V and W. It is noted that the terms "uv voltage", "vw voltage", and "wu voltage" represent hereinafter the voltage between these input terminals. Thus, the first diode bridge 5 is electrically conducting only in a period of the input line voltage exceeding the DC voltage.

The power supply further includes a second diode bridge 6 and a third diode bridge 7. The second diode bridge 6 is comprised of six diodes 6a to 6f and the three diodes 6a to 6c of them are positioned at a positive-polarity output terminal side $P_{OUT6}$ and the other three diodes 6d to 6f of them are positioned at a negative-polarity output terminal side $N_{OUT6}$ of the second diode bridge 6. Similarly, the third diode bridge 7 is comprised of six diodes 7a to 7f and the three diodes 7a to 7c of them are positioned at a positive-polarity output terminal side $P_{OUT7}$ and the other three diodes 7d to 7f of them are positioned at a negative-polarity output terminal side $N_{OUT7}$ of the third diode bridge 7.

The positive-polarity output terminal $P_{OUT5}$ of the first diode bridge 5 is commonly connected with the positive-polarity output terminal $P_{OUT6}$ of the second diode bridge 6, and the negative-polarity output terminal $N_{OUT5}$ of the first diode bridge 5 is commonly connected with the negative-polarity output terminal $N_{OUT7}$ of the third diode bridge 7. A negative-polarity output terminal $N_{OUT6}$ of the second diode bridge 6 is serially connected to a positive-polarity output terminal $P_{OUT7}$ of the third diode bridge 7 via a connecting point n.

In this construction, the power supply further includes six capacitors 8 to 13 for improving input power factors, and the three capacitors 8, 10, 12 of them are connected between the AC input terminals (u1, v1, w1) of the first diode bridge 5 and the AC input terminals (u2, v2, w2) of the second diode bridge 6 respectively corresponding to the three phases, and the other three capacitors 9, 11, 13 are connected between the AC input terminals (u1, v1, w1) of the first diode bridge 5 and AC input terminals (u3, v3, w3) of the third diode bridge 7 respectively corresponding to the three phases. An electrolytic capacitor 14 is connected between the positive-polarity output terminal $P_{OUT6}$ of the second diode bridge 6 and the negative-polarity output terminal $N_{OUT7}$ of the third diode bridge 7 for smoothing the DC output voltage of these first to third diode bridges 5 to 7, so that the smoothed DC voltage is supplied to a load 15 which is connected in parallel to the electrolytic capacitor 14 at an output side of the power supply.

It is noted that, the AC input terminals (u1, v1, w1), (u2, v2, w2), (u3, v3, w3) of the first to third diode bridges 5 to 7 are simply represented by (u, v, w), hereinafter.

The action and operation of the power supply configured as described above will be described with reference to FIGS. 2 to 11. Firstly, a basic principle for realizing an improvement of the input power factor will be explained. FIG. 2 only shows components that contribute to the improvement of the input power factor. The principle of the improvement of the input power factor can be described by the explanation about a flow of an input current whose phase agrees with the input phase voltage. The diode bridge 5 that is electrically conducting only during the period when the input line voltage exceeds the DC voltage is unnecessary for this explanation, and therefore the diode bridge 5 is omitted here.

Next, the explanation about the voltage applied to the capacitors 8 to 13 is required. If the explanation is continued with the capacitors as components, it becomes necessary to consider a discharge path, so that it becomes difficult to simplify the circuit for the explanation of the principle. Therefore, FIG. 3(a) shows an equivalent circuit diagram wherein the capacitors 8 to 13 in FIG. 2 are replaced with resistors R1 to R6 and the components contributing to the improvement of the input power factor are limited. In FIG. 3(a), the reactors 2 to 4, electrolytic capacitor 14, load 15, diodes 6a, 6b and 6c, and diodes 7d, 7e and 7f that are unnecessary for explaining the voltage applied to the resistors R1 to R6 are omitted. These components are omitted by the following reasons. Specifically, the reactors can be omitted in the explanation of the voltage applied to the resistors R1 to R6, and six diodes are omitted because they are not energized due to the replacement of the capacitors with the resistors, and they are considered to be in an opened state.

FIG. 3(b) illustrates the components in FIG. 3(a) as more easily understood, and FIG. 3(c) is a view in which the resistors R1 to R6 are replaced with resistors R7 to R9 for further simplifying the components each of which is connected to each of the three phases, since the resistors R1 to R6 have the same constant and the diodes are connected reversely in parallel to the resistors each of which is connected to each of the three phases. The resistances of the resistors R7 to R9 are half of those of the resistors R1 to R6.

As apparent from FIG. 3(c), the phase voltage of each phase of the three-phase AC power source 1 is applied to the resistors R7 to R9 that collectively represent the components connected to the AC input terminals of the second and third diode bridges 6 and 7 in this embodiment. This is because, by serially connecting the diode bridges 6 and 7, the junction n constitutes a virtual neutral point.

The principle of the improvement of the input power factor in this embodiment is such that, since the phase voltage is applied to the components connected to the AC input terminals of the diode bridges 6 and 7 due to the formation of the virtual neutral point (n) as described above, the input current of each phase starts to flow from the zero-cross point of the phase voltage regardless of the load amount or constant of the components, and thus the input power factor is improved.

Accordingly, the phase voltage is alternately applied, as being subject to half-wave rectification, to the resistors R1 to R6 which are connected to the AC input terminals of the diode bridges 6 and 7. It is supposed here that the resistors R1 to R6 are returned to the capacitors 8 to 13. Even if the phase voltage that is subject to half-wave rectification is applied to the capacitors 8 to 13, the current can flow from the zero-cross point of the phase voltage at the beginning unless the capacitors 8 to 13 are charged, but once they are charged, the current does not flow unless they are discharged.

Subsequently explained with reference to FIGS. 4 to 11 is the operation in which, even if the resistors R1 to R6 are returned to the capacitors 8 to 13, the input current flows from the zero-cross point of the phase voltage, and the charges charged to the capacitors 8 to 13 are effectively utilized by the discharge operation. The following explanation is made under the rated load condition in case where the constant of each component is appropriately selected and the input power factor upon the rated load becomes not less than 99 %. Specifically explained, in a power supply having an input line voltage of 380 V and rating of 6.5 kW, the inductance of the reactors 2 to 4 is about 20 mH to 30 mH, the capacity of the capacitors 8 to 13 is 10 uF to 20 uF, and the capacity of the electrolytic capacitor is about 1 mF to 2.2 mF.

FIG. 4 shows a voltage distribution of the capacitors 8 to 13 at the initial state at the zero-cross point of the U-phase voltage eu for explaining the current flow on the circuit in this embodiment. FIGS. 5 to 10 are explanatory views for showing the current flow during each of six periods T1 to T6 that are obtained by dividing the positive half cycle of the U-phase voltage eu at the timings t0 to t6 when the path of the current flowing through the circuit changes. The timings t0 to t6 are set for about 30 degrees in the case of the aforesaid circuit constant setting condition.

FIG. 11 is a waveform chart at each section, showing each of the phase voltages eu, ev, and ew, and voltages Vc8 to Vc13 of the capacitors 8 to 13. It is to be noted that the potential at the side connected to the diode bridge 6 assumes positive polarity as for Vc8, Vc10, and Vc12, and the potential at the side of the input power source assumes positive polarity as for Vc9, Vc11, and Vc13. With reference to the above-mentioned explanatory views, the operation of the power supply in the period of the positive half cycle of the U-phase voltage will be explained as below.

Firstly, the U-phase voltage eu is zero volt in the initial state at the time t0 shown in FIG. 4. In this case, the voltage of the capacitor 8 connected to the U-phase is approximately two-thirds of the DC voltage Vdc. Further, the voltage of the capacitor 9 is zero volt, and as shown in the voltage at the time t0 in FIG. 11, the capacitor 10 is charged to 1/3 Vdc, the capacitor 11 is charged to 0 volt, the capacitor 12 is charged to 0 volt, and the capacitor 13 is charged to 2/3 Vdc. The fact that the initial voltage becomes one-third or two-thirds of the DC voltage Vdc will be described later in the explanation of the circuit operation.

Next, the operation during each of the periods T1 to T6 will be explained, while clarifying the meaning of t0 to t6 shown in Fig. 11. Firstly, t0 is a voltage zero-cross point where the U-phase voltage changes from negative to positive. During the period T1, the capacitor 9 connected to the U-phase is charged through the diode 7a, and the capacitor 8 is discharged through the diode 6a to the electrolytic capacitor 14, wherein the discharged current flows to the V-phase via the diode 5e, as shown in FIG. 5. Since the V-phase voltage approaches the negative peak voltage, the current that charges the capacitor 9 further charges the capacitor 10 via the diode 6e and flows to the V-phase. Then, during this period, current flows from the W-phase toward the V-phase via the diodes 5c and 5e as a normal rectification. This is because the current continues due to the energy release action of the reactors 3 and 4 regardless of the reduction in the voltage of the W-phase. Tthe operation during the period involving the charge and discharge of the capacitor is referred to as "charge and discharge mode", hereinafter.

It is to be noted that, in FIG. 5, the current relating to the charge and discharge of the capacitors 8 to 13 is shown by a solid line, and the current that charges the electrolytic capacitor 14 only through the built-in diodes of the diode bridge 5 without through the capacitors 8 to 13 is shown by a broken line, in order to facilitate the understanding. The same is true for FIGS. 6 to 10.

The aforesaid operation will be explained in more detail on the basis of the line voltage. Referring to the capacitors 9 and 10 connected in series between U and V phases, the voltage of the capacitor 9 is zero volt and the voltage of the capacitor 10 is 1/3 Vdc, so that it is supposed that current starts to flow after the instantaneous value of the UV line voltage exceeds 1/3 of the DC voltage Vdc. When the calculation is made supposing that the peak value of the UV line voltage is equal to Vdc, its angle becomes approximately 20 degrees from the voltage zero-cross point of the UV voltage, and the current starts to flow at the angle advancing by about 10 degrees from the voltage zero-cross point of the U-phase voltage. However, the current flows from the W-phase to the U-phase due to the energy release action of the reactors 2 and 4 immediately before the voltage zero-cross point of the U-phase except for the current flowing from the W-phase to the V-phase described above. Therefore, the uv voltage of the diode bridge 5 becomes 0 volt, and hence, current does not flow through the capacitors 9 and 10. When the release of the energy accumulated in the reactor 2 is completed and the U-phase current becomes 0 ampere, a potential difference exceeding 1/3 Vdc is produced between u and v phases of the diode bridge 5, and therefore, current flows through the capacitors 9 and 10.

In the power supply according to this embodiment, strictly speaking, current does not always start to flow from the voltage zero-cross point of each phase in any case. However, current does not flow until the uv voltage rises to 1/3 Vdc even upon a light load. Accordingly, the reduction of the input power factor can be prevented compared to the conventional circuit configuration. In general, the reduction of the input power factor is not particularly a problem at a load factor of 50 % or more because of the presence of the reactor for reducing a harmonic current. Confirming the state of the voltage change at each part of the circuit during the period T1 with reference to FIG. 11, the potential Vc8 of the capacitor 8 monotonously decreases from 2/3 Vdc to 0 volt, the potential Vc9 of the capacitor 9 rises from 0 volt to 1/3 Vdc, and the potential Vc10 of the capacitor 10 rises from 1/3 Vdc to 2/3 Vdc.

The operation during the period T2 will be next explained. The time t1 is a point when the uv voltage of the diode 5 agrees with the DC voltage Vdc. Accordingly, the diodes 5a and 5e are conducting during this period, but the charge to the capacitors 9 and 10 is stopped since the sum of the voltages charged to the capacitors 9 and 10 becomes equal to Vdc. On the other hand, the current from the W-phase to the V-phase continuously flows due to the action of the reactors 3 and 4, resulting in that current flows only through the diode bridge 5 as shown in FIG. 6. This indicates a full-wave rectification similar to that of a normal rectifying circuit (hereinafter, referred to as "full-wave rectification mode"). It can be confirmed from FIG. 11 that a change in the voltage is not observed in each capacitor during the period T2 and that the charge and discharge to and from the capacitors are not executed in this period.

On the other hand, the timing t1 agrees with the point when the phase of the U-phase voltage is 30 degrees, and the instantaneous value of the U-phase voltage is a half of the peak value of the phase voltage. At this timing, the V-phase voltage becomes the peak value of the negative half cycle in this case, and therefore, the ratio of the voltages of the capacitors 9 and 10 is 1:2. This can be explained that the voltages are divided into 1/3 Vdc and 2/3 Vdc respectively.

Referring to the period T3, since the timing t2 is the voltage zero-cross point of the W-phase from positive to negative, during the period T3, the capacitors 12 and 13 connected to the W-phase are gradually charged from 0 volt via the diode 6f on the basis of the junction of the W-phase because the voltage of the capacitor 12 at the timing t2 is 0 volt as shown in FIG. 11. Since the capacitor 13 is charged to 2/3 Vdc with the junction of the W-phase as positive, it is discharged toward the W-phase via the diode 7f, and this current flows from the U-phase via the diode 5a, charging the electrolytic capacitor 14 and returning to the capacitor 13. Therefore, the accumulated charges can effectively be utilized. On the other hand, in the period T3, the voltage of the U-phase rises to the peak value, so that the charging current also flows to the capacitor 9. The current charging the capacitor 9 simultaneously charges the capacitor 12 via the diode 7a through the diode 6f. Further, during this period, the uv voltage of the diode bridge 5 remains clamped to Vdc, and therefore, in this period T3, the operation becomes the charge and discharge mode involving a normal rectification through the diodes 5a and 5e. The current flow during this period T3 is shown in FIG. 7.

Subsequently, the operation during the period T4 will be explained. The timing t3 is a point when the wu voltage of the diode bridge 5 agrees with the DC voltage Vdc. Therefore, the diodes 5a and 5f are conducting during this period, but the charge to the capacitors 9 and 12 is stopped since the sum of the voltage charged to the capacitors 9 and 12 becomes equal to Vdc. On the other hand, the current continuously flows from the U-phase to the V-phase via the diodes 5a and 5e due to the action of the reactors 2 and 3, resulting in that the operation becomes a full-wave rectification mode in which the current flows only through the diode bridge 5 as shown in FIG. 8.

Referring to the operation during the period T5, since the timing t4 is a voltage zero-cross point of the V-phase from negative to positive, it is considered as a charge and discharge mode similar to the operation during the period T1 starting from the zero-cross point t0 of the U-phase,. Specifically, the capacitor 10 discharges its charges toward the W-phase in the direction of charging the electrolytic capacitor 14 via the diodes 6b and 5f by the current from the V-phase, and simultaneously, charges the capacitors 11 and 12 via the diodes 7b and 6f, as shown in FIG. 9. Further, the reactors 2 and 4. simultaneously perform the normal rectification to the electrolytic capacitor 14 via the diodes 5a and 5f Therefore, the operation is as a charge and discharge mode.

Finally, the operation during the period T6 will be explained. The timing t5 is a point when the vw voltage of the diode bridge 5 agrees with the DC voltage Vdc.

Accordingly, during this period, the diodes 5b and 5f are conducting, but the charge to the capacitors 11 and 12 is stopped because the sum of the voltages charged to the capacitors 11 and 12 become equal to Vdc. On the other hand, the current continuously flows from the U-phase to the W-phase via the diodes 5a and 5f due to the actions of the reactors 2 and 4. Therefore, the operation becomes a full-wave rectification mode in which current flows only through the diode bridge 5 as shown in FIG. 10.

In this embodiment, the operation of the power supply is explained for the positive half cycle of the U-phase voltage. However, the symmetric operation is carried out for the negative half cycle. Further, the V-phase and W-phase can be also considered in the same manner.

As described above, the power supply according to this embodiment is configured to have the three diode bridges 5, 6 and 7 arranged at the side of the three-phase AC power source to apply the phase voltage to the six capacitors, and further configured to alternately repeat the charge and discharge mode and the full-wave rectification mode by changing the charge and discharge of the capacitors. Therefore, the current can flow continuously corresponding to the voltage zero-cross point of each phase voltage, so that the input power factor can be improved.

FIG. 12 is a characteristic view for showing a relationship between the input power and the input power factor in case where the inductance of the reactor is 20 mH, the capacity of the capacitor is 15 uF, and the capacity of the electrolytic capacitor is 1.1 mF, under the condition that the rated power is 6.5 kW with the input frequency of 50 Hz and input line voltage of 380 V. In order to shown the characteristic change by a variation in the input voltage, FIG. 12 shows two cases, one is the case in which the input voltage is 380 V and the other is the case in which the input voltage is 342 V that is 10 % less than 380 V As understood from FIG. 12, in case where the input power factor in the vicinity of the rated voltage is set to 99 % or more, the input power factor of 95 % or more can be secured even under a load factor of 1/2, and further, the input power factor of near 90 % can be secured under a load factor of 1/3. Moreover, it is understood that the change in the input power factor is small even when the input voltage is reduced, thereby providing satisfactory characteristic.

The circuit operation in this embodiment as explained above is made from the viewpoint of the improvement in the input power factor. Next, the effect of reducing the harmonic current will be explained. FIG. 13 is a characteristic view showing a relationship between the input power and the ratio of the IEC harmonic current regulation value to the harmonic current in this embodiment. The conditions such as the constant at each part are the same as those in FIG. 12. Further, FIG. 12 only shows the harmonic current of three orders whose ratio to the regulation value of the harmonic current is the greatest.

The harmonic currents other than the aforesaid harmonic current do not become a problem since they are smaller than the same.

According to FIG. 13, even the ratio to the regulation value of the fifth harmonic having the greatest ratio to the regulation value is a maximum of 88 %, which means there is an allowance of 12 % to the regulation value. Further, the load factor at this time is about 1/4, so that the design having further allowance can be made at the area that is not the normally driven area.

FIG. 14 shows waveforms of the U-phase voltage eu and the U-phase current Iu under the input of 6.6 kW with the constants set as described above, where Vu is represented by 50 V/div, Iu is represented by 10 A/div and time is represented by 2 ms/div. As understood from this figure, the phase of the current and the phase of the voltage generally agree with each other, and since the current has a sine waveform, both the improvement in the input power factor and the reduction in the harmonic current are possible.

The power supply according to this embodiment is compared to a conventional power supply with respect to the effect of the improvement in the input power factor and the reduction in size of the reactor. In order to secure 10 % or more of the margin to the harmonic regulation value in which the constants are set under the condition where the rated power is 6.5 kW and the input voltage is 380 V so as to obtain 99 % or more of the input power factor upon the rated load, approximately 30 mH of the inductance of the reactor is required. In this case, the input power factor becomes about 90 % at the load factor of 1/2 due to the influence of the phase-advance current of the capacitor upon a light load. This means that the reduction in the input power factor is great due to the reduction in the load factor.

The main factor for the fact that only the small reactor is enough in this embodiment is as follows. Since the application of the phase voltage to each capacitor upon the replacement with the equivalent circuit is utilized, the absolute value of the voltage applied to the reactor and the rate of change of the voltage with time are smaller than those of the conventional power supply when current starts to flow from the voltage zero-cross point. Therefore, it is possible to realize the reduction in the rate of change of the current with time necessary for the reduction in the harmonic current with reduced inductance.

As described above, the power supply according to the present invention can realize the improvement of the input power factor and the reduction of the harmonic current with the reactor that is smaller than the conventional one, and further can improve the reduction of the input power factor upon a light load.

In this embodiment, the inductance characteristic for the reactors 2, 3 and 4 is not particularly specified. However, it may be possible to set the inductance in a manner such that the inductance is reduced from the point exceeding a predetermined current value, i.e., each of the reactors 2, 3 and 4 may be used as a so-called saturable reactor. This configuration can prevent the reduction in DC voltage caused by a voltage drop by the reactors 2, 3 and 4 when the voltage of the three-phase AC power source 1 drops upon a heavy load, and further can prevent the reduction in the input power factor caused by phase shift between input current and power current occurring when the DC voltage drops.

In this embodiment, the reactor is used as divided into three. However, the reactor may be used as three-phase reactor having a configuration of one core and coil provided on its three legs. The three-phase reactor has a well-known advantage such that less used amount of the core for obtaining the equal inductance is enough by utilizing that the total of the current of each phase is zero, compared to the case where three single-phase reactors are used. Therefore, it is effective for downsizing the whole power supply and reducing weight thereof.

FIG. 15 is a circuit diagram of a power supply according to the second embodiment of the present invention. The difference of the second embodiment compared to the circuit diagram of the power supply according to the first embodiment resides in a feature of providing a switching means 16 at the junction between the capacitors 8 to 13 and the diode bridge 5. As a configuration example of the switching means 16, switching elements 16a, 16b and 16c included in a block 16 shown by a broken line in Fig. 15 are provided corresponding to the U, V W phases respectively to switch the connection of the six capacitors 8 to 13. The basic circuit operation of this embodiment is the same as that of the first embodiment. This embodiment copes with the case where there is a driven state with a light load having a load factor of 30 % or less, and aims to prevent DC overvoltage caused by the voltage rise of the capacitors 8 to 13 upon a light load, and aims to improve the input power factor upon the light load and reduce the harmonic current.

Firstly, the prevention of the DC overvoltage will be explained. If the basic circuit operation is continued with the switching means 16 closed in this embodiment, the voltage of each of the capacitors 8 to 13 is charged to about 2/3 Vdc, and then, the charges are discharged toward the electrolytic capacitor 14, and this operation is repeated, as explained in the first embodiment. In the operation within a range of the load factor being 30 % or more, in general, the total of the energy accumulated in the capacitors 8 to 13, energy accumulated in the reactors 2 to 4, and energy supplied from the three-phase AC power source 1 balances the consumption energy of the load, so that DC voltage does not so vary. However, when the load factor falls below 30 % to be 20 % or less, the balance starts to be loosed. This results in raising raise the DC voltage only with the energy accumulated in the capacitors 8 to 13 and the energy accumulated in the reactors 2 to 4.

If this situation proceeds, the circuit falls into the DC overvoltage state, which might damage the components of the circuit, by the rise of the DC voltage. Therefore, one of the objects of the power supply according to this embodiment is, in the case of the light-load operation, to stop the charge and discharge to and from the capacitors 8 to 13 by opening the switching means 16 for preventing the damage of the components of the circuit with the power supply to the load secured.

Next, the operation of this embodiment aiming to improve the input power factor and to reduce the harmonic current upon a light load will be explained. If the basic circuit operation is continued with the switching means 16 kept closed in this embodiment, the DC voltage rises as described above as the load becomes lighter. The problem of overvoltage due to the rise in the DC voltage is not caused within the range of the load factor being less than about 30 %. However, the rise in the DC voltage causes the deterioration of the input power factor and increase of the harmonic current. Explaining from the viewpoint of the deterioration of the input power factor, this is caused by the fact that the rate of change with time of the current flowing through the reactor increases because of the high DC voltage. Specifically, this is the cause of raising the peak value of the input current, and further, non-continuous reactor current causes the phase of the current flowing through the capacitors 8 to 13 to slightly advance as described in the first embodiment. Further, the voltage charged in the capacitors 8 to 13 also proportionally rises, so that the rate of change with time of the discharge current also rises to raise the peak value of the current, which is one cause of the deterioration in the input power factor.

The increase in the rate of change with time of the currents flowing through the reactor and capacitors includes a great number of harmonic current components, so that this is the cause of the increase in the harmonic current.

In this embodiment, during the light-load operation, the switching means 16 is opened to cut off the capacitors 8 to 13, in order to prevent harmful influence caused by the rise of the DC voltage and aforesaid increase of the rate of change with time of the current.

FIGS. 16(a) to 16(c) show various characteristics in case where the switching means 16 is opened when the circuit is driven with the input power of 2 kW or less, and in case where the switching means 16 is not opened. FIG. 16(a) is a characteristic view showing the relationship between the input power and the input power factor, wherein the input voltage and the component constant are the same as in FIG. 12. FIG. 16(b) is a characteristic view between the input power and the DC voltage in case where the switching means 16 is opened and in case where the switching means 16 is not opened, and FIG. 16(c) is a characteristic view between the input power and the fifth harmonic current, in case where the switching means 16 is opened and in case where the switching means 16 is not opened.

As described above, the present embodiment may be used for preventing the DC overvoltage, or for preventing the deterioration in the input power factor and preventing the increase in the harmonic current upon the light load with the DC voltage lower than the DC overvoltage state.

Although the switching means 16 for cutting off all the capacitors has a triple-pole structure in this embodiment, an optional one pole may be omitted and the capacitors may be cut off at two poles only for the purpose of preventing the charge and discharge of the capacitors.

FIG. 17 shows a circuit diagram of a power supply according to the third embodiment. The power supply of the third embodiment shown in FIG. 17 is further provided with a DC voltage detector 17 in addition to the configuration of the second embodiment. In this third embodiment, the basic circuit operation is the same as that in the first embodiment, and this embodiment has the same object as that of the second embodiment to prevent the overvoltage due to the voltage rise in the capacitors 8 to 13 upon a light load, or to improve the input power factor and reduce the harmonic current upon the light load by opening the switching means 16. The specific feature of this embodiment is to determine the timing of opening the switching means 16 according to the DC voltage.

Specifically, the improvement in various characteristics in case where the switching means 16 is opened with the input power of near 2 kW was explained with the use of FIGS. 16(a) to 16(c) in the explanation of the second embodiment. This indicates that the same result can be obtained even by opening the switching means 16 at the DC voltage of around 570 V as understood from FIG. 16(b). Therefore, in this third embodiment as shown in Fig. 17, the DC voltage detector 17 is serially connected between the positive-polar output terminal of the second diode bridge 6 and the switching means 16 to detect the DC voltage of the power source supplied to the load 15 to thereby automatically determine the timing of opening the switching means 16.

Instead of the DC voltage detector, an input current detector may be provided to control the opening of the switching means at a timing when the input current becomes not more than a predetermined value. This is achieved by the fact that the input power can be estimated by the input current. Alternatively, both the DC voltage detector and the input current detector may be provided for different purposes, i.e., the input current detector may be used to prevent the deterioration of the input power factor and prevent the increase of the harmonic current upon a light load, and on the other hand, the DC voltage detector may be used for protecting the components from the DC overvoltage.

Instead of the DC voltage detector, an output power detector may be provided to make a control to open the switching means at a timing when the output power becomes not more than a predetermined value. Both the DC voltage detector and the output power detector may be provided for different purposes, i.e., the output power detector may be used to prevent the deterioration of the input power factor and prevent the increase of the harmonic current upon a light load, and on the other hand, the DC voltage detector may be used for protecting the components from the DC overvoltage.

Instead of the DC voltage detector, a DC current detector may be provided to make a control to open the switching means at a timing when the DC current becomes not more than a predetermined value.

FIG. 18 is a circuit diagram showing a power supply according to the fourth embodiment of the present invention. The configuration of the fourth embodiment shown in FIG. 18 is different from that of the second embodiment shown in FIG. 15 in the following point.

That is, although the switching means 16 is placed between the AC input of the diode bridge 5 and the capacitors 8 to 13 in the second embodiment, another switching means 16' composed of a switching element is provided at a junction between the diode bridge 6 and the diode bridge 7. The place of providing the switching element corresponds to the connecting point n shown in FIG. 1. This configuration can achieve a contact structure of one pole of the switching means while obtaining the effect same as that of the second embodiment, and further with a simplified circuit configuration.

In this embodiment, the switching means 16' may be composed of a single polar semiconductor device 18 that can control a current flowing only in one direction as shown in FIG. 19. In this configuration, the semiconductor device 18 can be comprised of, for example, a transistor, thyristor, FET, diode or the like. This can solve the problem of switching life and quick response property of the switching means, so that the reliability of the whole circuit can be enhanced. In the present embodiment, the switching means 16' composed of a single semiconductor device 18 is based on the feature that the current flowing through the junction between the diode bridges 6 and 7 is always in one direction due to the actions of the diode bridges 6 and 7.

Also, in the power supply according to the present embodiment, a DC voltage detector 17 as shown in FIG. 20 may be provided, in a similar manner to that of the third embodiment, to automatically control the switching means 16' on the basis of the DC voltage. Similarly to the third embodiment, the switching means may be operated based upon the input current, DC current, or output power, instead of the DC voltage.

FIG. 21 is a circuit diagram showing a power supply according to the fifth embodiment of the present invention.

The configuration of the present embodiment shown in FIG. 21 is further provided with a precharge controller 19 for controlling the switching means 16' in addition to the configuration of the fourth embodiment shown in Fig. 18. The operation and effect in the this embodiment relating to improvement of the input power factor and reduction of the harmonic current during the normal operation are the same as those in the first embodiment. The operation and effect of this embodiment in which the switching means 16' is brought into an open state from a conducting state in order to prevent a DC overvoltage, deterioration of the input power factor, and prevent increase of the harmonic current upon a light load are the same as those in the second embodiment.

The specific feature of the power supply according to this embodiment resides in the operation for bringing the switching means 16' into a conducting state from its open state when the operation is changed to the normal operation state from the light-load state. If the switching means 16' is only brought into a conducting state, there is a problem that a rush current may flow into the capacitors 8 to 13 from the three-phase AC power source 1, resulting in deterioration in the components having a contact or fusion. The present embodiment prevents this problem. Specifically, when the switching means 16' is brought into its conducting state from its open state, the rush current is prevented by the control such as gradually increasing the conducting period by the precharge controller 19.

Although the switching means 16' is provided at the junction between the diode bridge 6 and the diode bridge 7 in this embodiment, the place of the switching means 16' may be changed to the place between the AC input terminals of the diode bridge 5 and the capacitors 8 to 13.

Also, in this embodiment, the switching means 16' may be replaced with the semiconductor device 18 as shown in Fig. 19, while obtaining the same effect.

FIG. 22 is a circuit diagram showing a power supply according to the sixth embodiment of the present invention.

The configuration of the present embodiment shown in FIG. 22 is different from that of the first embodiment shown in FIG. 1 in the following point. More specifically, the configuration of the present embodiment is further provided with added capacitors 20 to 25 and added capacitor switching means 33 composed of added capacitor switching elements 26 to 31, in addition to the configuration of the first embodiment. The added capacitors 20, 22 and 24 respectively serially connected to the switching elements 26, 27 and 28 are connected in parallel to the capacitors 8, 10 and 12, respectively. The added capacitors 21, 23 and 25 respectively serially connected to the switching elements 29, 30 and 31 are connected in parallel to the capacitors 9, 11 and 13, respectively.

The operation and effect relating to the improvement of the input power factor and the reduction of the harmonic current during the normal operation are the same as those in the first embodiment. The features of this embodiment are to obtain an effect of preventing reduction in DC voltage when the input voltage is reduced or upon a heavy load and preventing reduction of the input power factor caused by a delay in phase of the input current, and to obtain an effect of preventing the DC overvoltage, preventing reduction of the input power factor due to an advance in phase of the input current, and preventing the increase of the harmonic current, upon a light load.

Specifically, according to the configuration of the first embodiment, if the constants of the capacitors 8 to 13 are increased, the DC voltage drop upon such as a overload can be prevented by the voltage rise effect, but the DC voltage rises due to the actions of the capacitors 8 to 13 upon a light load. When the DC voltage rises, the harmonic current increase with this voltage rise, and therefore, there arises a problem that the harmonic current increases and the input power factor reduces due to the advance in phase of the input current. On the contrary, when the constants of the capacitors 8 to 13 are decreased, the input power factor can be improved, the harmonic current can be reduced, and the DC overvoltage can be prevented, upon a light load. However, there becomes a problem that the DC voltage is reduced and the input power factor is deteriorated due to a delay in phase of the input current, upon a heavy load.

The present embodiment is to solve the aforesaid problems. The added capacitor switching means 33 composed of the switching elements 26 to 31 are operated in accordance with the load amount to control the charge and discharge of the added capacitors 20 to 25. Thus, the reduction of the DC voltage and the increase of the harmonic current are prevented, and improving the input power factor by compensating the phase delay of the input current. In case where the constants of the capacitors 8 to 13 are set such that the input power factor at around the rated power becomes the maximum, there can be obtained an effect of preventing the reduction of the DC voltage upon reduction in the input voltage or upon a heavy load and preventing the reduction of the input power factor due to the phase delay of the input current. In case where the constants of the capacitors 8 to 13 are set such that the input power factor upon a light load becomes the maximum, there can be obtained an effect of reducing the harmonic current and improving the input power factor upon a light load.

(Seventh Embodiment)

FIG. 23 is a circuit diagram showing a power supply according to the seventh embodiment of the present invention.

The configuration of the present embodiment shown in FIG. 23 is different from the sixth embodiment shown in FIG. 22 in the point that a DC voltage detector 17 is further provided. More specifically, as shown in FIG. 23, the DC voltage detector 17 is serially connected between the positive-polar output terminal of the second diode bridge 6 and the added capacitor switching means 33 to detect the DC voltage of the power source supplied to the load 15 to thereby automatically determine the timing of opening the added capacitor switching means 33.

In this embodiment, the basic circuit operation is the same as that in the sixth embodiment. Further, the same effect can be obtained by operating the added capacitor switching elements 26 to 31. The feature of the power supply according to this embodiment resides in that the timing of opening the added capacitor switching elements 26 to 31 is automatically determined according to the DC voltage.

The timing of operating the added capacitor switching elements may be determined not by the DC voltage but by the input current or DC current. Further, the same effect can be obtained by determining the switching timing by the output power.

FIG. 24 is a circuit diagram showing a power supply according to the eighth embodiment of the present invention.

The configuration of the eighth embodiment shown in FIG. 24 different from the sixth embodiment shown in FIG. 22 in the point that an added capacitor precharge controller 32 is further provided for controlling the added capacitor switching means 33 composed of the added capacitor switching elements 26 to 31. More specifically, the added capacitor precharge controller 32 is serially connected between the positive-polar output terminal of the second diode bridge 6 and the added capacitor switching means 33. In this embodiment, the operation and effect of the improvement of the input power factor, reduction of the harmonic current, and prevention of DC overvoltage are the same as those in the sixth embodiment.

The specific feature of the power supply according to the present embodiment resides in the operation for bringing the added capacitor switching elements 26 to 31 into the conducting state from the open state. If the added capacitor switching elements 26 to 31 are simply brought into the conducting state, a rush current flows into the added capacitors 20 to 25 from the three-phase AC power source 1, resulting in that there is a fear of deterioration in the components having a contact or fusion. This embodiment prevents this problem. Specifically, when the added capacitor switching elements 26 to 31 are brought into the conducting state from the open state, the rush current is prevented by the control in such a manner of gradually increasing the conducting period using the added capacitor precharge controller 32.

As described above, the power supply according to the present invention can be used as a DC power supply or a pre-stage of a compressor driving device, and thus a harmonic current can be reduced and an input power factor can be improved. Therefore, the power supply according to the present invention provides effective use of power facility without giving an adverse effect on the other load facility.

**Claims**

**1.** A power supply comprising:

    a three-phase AC power source (1);
    a first diode bridge (5) comprised of six diodes which are connected to the three-phase AC power source via reactors (2, 3, 4);

a second diode bridge (6) comprised of six diodes, having a positive-polarity output terminal ($P_{OUT6}$) commonly connected to a positive-polarity output terminal ($P_{OUT5}$) of the first diode bridge (5);

**characterised in that** the power supply further comprises:

a third diode bridge (7) comprised of six diodes, having a negative-polarity output terminal ($N_{OUT7}$) commonly connected to a negative-polarity output terminal ($N_{OUT5}$) of the first diode bridge (5) and having a positive-polarity output terminal ($P_{OUT7}$) connected to a negative-polarity output terminal ($N_{OUT6}$) of the second diode bridge (6); and total six capacitors (8, 10, 12; 9, 11, 13), with three capacitors (8, 10, 12) thereof being connected between AC input terminals (u1, v1, w1) of the first diode bridge and AC input terminals (u2, v2, w2) of the second diode bridge respectively with one capacitor per phase, and with the remaining three capacitors (9, 11, 13) thereof being connected between the AC input terminals (u1, v1, w1) of the first diode bridge and AC input terminals (u3, v3, w3) of the third diode bridge respectively with one capacitor per phase.

2. The power supply according to claim 1 further comprising a first switching means (16) which is provided between the AC input terminals of the first diode bridge and the six capacitors.

3. The power supply according to claim 1 further comprising a second switching means (16') which is provided at a junction between the second diode bridge (6) and the third diode bridge (7).

4. The power supply according to claim 3, wherein said second switching means (16') is composed of a single polar semiconductor device (18) which can control current flowing only in one direction.

5. The power supply according to any one of claims 2 to 4 further comprising DC voltage detecting means (17) for detecting a DC voltage applied to a load (15) from the three-phase AC power source (1) and controlling a switching operation of the first or second switching means (16, 16') based on the detected DC voltage.

6. The power supply according to any one of claims 2 to 4 further comprising input current detecting means for detecting a current applied to a load (15) from the three-phase AC power source (1) and controlling a switching operation of the first or second switching means (16, 16') based on the detected input current.

7. The power supply according to any one of claims 2 to 4 further comprising output power detecting means for detecting an output power applied to a load (15) from the three-phase AC power source (1) and controlling a switching operation of the first or second switching means (16, 16') based on the detected output power.

8. The power supply according to any one of claims 2 to 4 further comprising DC current detecting means for detecting a DC current flowing through a load (15) and controlling a switching operation of the first or second switching means (16, 16') based on the detected DC current.

9. The power supply according to any one of claims 2 to 8 further comprising precharge control means (19) for controlling a current flowing to the six capacitors when the first or second switching means (16, 16') is turned on.

10. The power supply according to any one of claims 1 to 9 further comprising six added capacitors (20, 22, 24; 21, 23, 25) and added capacitor switching means (33) for switching on and off the added capacitors (20, 22, 24; 21, 23, 25), wherein said added capacitors (20, 22, 24; 21, 23, 25) are respectively connected in parallel to the six capacitors (8, 10, 12; 9, 11, 13) via said added capacitor switching means (33).

11. The power supply according to claim 10 further comprising DC voltage detecting means (17) for detecting a DC voltage applied to a load (15) from the three-phase AC power source (1) and controlling a switching operation of the added capacitor switching means (33) based on the detected DC voltage.

12. The power supply according to claim 10 further comprising input current detecting means for detecting a current applied to a load (15) from the three-phase AC power source (1) and controlling a switching operation of the added capacitor switching means (33) based on the detected input current.

13. The power supply according to claim 10 further comprising output power detecting means for detecting an output power applied to a load (15) from the three-phase AC power source (1) and controlling a switching operation of the added capacitor switching means (33) based on the detected output power.

14. The power supply according to claim 10 further comprising DC current detecting means for detecting a current flowing through a load (15) and controlling a switching operation of the added capacitor switching means (33) based on the detected DC current.

15. The power supply according to any one of claims 10 to 14 further comprising precharge control means (32) for controlling the current flowing through the added capacitors (20, 22, 24; 21, 23, 25) when the added capacitor switching means (33) is turned on.

16. The power supply according to any one of claims 1 to 15 having saturation characteristics such that, when the current flowing through the reactors becomes not less than a prescribed value, the inductance of the reactors reduces in accordance with the current.

17. The power supply according to any one of claims 1 to 16, wherein each of said reactors (2, 3, 4) is a three-phase reactor having a single core and three legs thereof and a coil provided around each of the legs.

## Patentansprüche

1. Stromversorgung, umfassend:

eine Dreiphasen-Wechselstromquelle (1);
eine erste Diodenbrücke (5), die aus sechs Dioden besteht, die über Drosselspulen (2, 3, 4) mit der Dreiphasen-Wechselstromquelle verbunden sind);
eine zweite Diodenbrücke (6), die aus sechs Dioden besteht, mit einer Ausgangsklemme ($P_{OUT6}$) positiver Polarität, die üblicherweise mit einer Ausgangsklemme ($P_{OUT5}$) positiver Polarität der ersten Diodenbrücke (5) verbunden ist, dadurch gekennzechnet, dass die Stromversorgung ferner umfasst:

eine dritte Diodenbrücke (7), die aus sechs Dioden besteht, mit einer Ausgangsklemme ($N_{OUT7}$) negativer Polarität, die üblicher weise mit einer Ausgangsklemme ($N_{OUT5}$) negativer Polarität verbunden ist der ersten Diodenbrücke (5) verbunden ist und eine Auswgangsklemme ($P_{OUT7}$) negativer Polarität aufweist, die mit einer Ausgangsklemme ($N_{OUT6}$) negativer Polarität der zweiten Diodenbrücke (6) verbunden ist; und
insgesamt sechs Kondensatoren (8, 10, 12; 9, 11, 13), wobei drei Kondensatoren (8, 10, 12) davon zwischen den Wechselstrom-Eingangsklemmen (u1, v1, w1) der ersten Diodenbrücke und Wechselstrom-Eingangsklemmen (u2, v2, w2) der zweiten Diodenbrücke jeweils mit einem Kondensator pro Phase verbunden sind, und wobei die restlichen drei Kondensatoren (9, 11, 13) davon zwischen den Wechselstrom-Eingangsklemmen (u1, v1, w1) der ersten Diodenbrücke und Wechselstrom-Eingangsklemmen (u3, v3, w3) der dritten Diodenbrücke jeweils mit einem Kondensator pro Phase verbunden sind.

2. Stromversorgung nach Anspruch 1, die ferner ein Schaltmittel (16) umfasst, das zwischen den Wechselstrom-Eingangsklemmen der ersten Diodenbrücke und den sechs Kondensatoren bereitgestellt ist.

3. Stromversorgung nach Anspruch 1, die ferner ein zweites Schaltmittel (16') umfasst, das an einer Verbindungsstelle zwischen der zweiten Diodenbrücke (6) und der dritten Diodenbrücke (7) bereitgestellt ist.

4. Stromversorgung nach Anspruch 3, wobei das zweite Schaltmittel (16') aus einer einpoligen Halbleitervorrichtung (18) besteht, die Strom steuern kann, der nur in eine Richtung fließt.

5. Stromversorgung nach einem der Ansprüche 2 bis 4, die ferner Gleichstromspannungs-Erkennungsmittel (17) zum Erkennen einer Gleichstromspannung, die an eine Last (15) ab der Dreiphasen-Wechselstromquelle (1) angelegt wird und zum Steuern eines Schaltbetriebs der ersten oder zweiten Schaltmittel (16, 16') auf der erkannten Gleichstromspannung beruhend umfasst.

6. Stromversorgung nach einem der Ansprüche 2 bis 4, die ferner Eingangsstrom-Erkennungsmittel zum Erkennen eines Stroms, der auf eine Last (15) ab der Dreiphasen-Wechselstromquelle (1) angewandt wird und zum Steuern eines Schaltbetriebs der ersten oder zweiten Schaltmittel (16, 16') auf dem erkannten Eingangsstrom beruhend umfasst.

7. Stromversorgung nach einem der Ansprüche 2 bis 4, die ferner Ausgangsstrom-Erkennungsmittel zum Erkennen einer Ausgangsstroms, der auf eine Last (15) ab der Dreiphasen-Wechselstromquelle (1) angewandt wird und zum Steuern eines Schaltbetriebs der ersten oder zweiten Schaltmittel (16, 16') auf dem erkannten Ausgangsstrom beruhend umfasst.

8. Stromversorgung nach einem der Ansprüche 2 bis 4, die ferner Gleichstrom-Erkennungsmittel zum Erkennen eines Gleichstroms, der durch eine Last (15) fließt und zum Steuern eines Schaltbetriebs der ersten oder zweiten Schaltmittel (16, 16') auf dem erkannten Gleichstrom beruhend umfasst.

9. Stromversorgung nach einem der Ansprüche 2 bis 8, die ferner ein Vorladesteuermittel (19) zum Steuern eines Stroms umfasst, der zu den sechs Kondensatoren fließt, wenn das erste oder zweite Schaltmittel (16, 16') eingeschaltet ist.

10. Stromversorgung nach einem der Ansprüche 1 bis 9, die ferner sechs hinzugefügte Kondensatoren (20, 22, 24; 21, 23, 25) und hinzugefügte Kondensatorschaltmittel (33) zum Ein- und Ausschalten der hinzugefügten Kondensatoren (20, 22, 24; 21, 23, 25) umfasst, wobei die hinzugefügten Kondensatoren (20, 22, 24; 21, 23, 25) jeweils parallel geschaltet über die hinzugefügten Kondensatorschaltmittel (33) mit den sechs Kondensatoren (8, 10, 12; 9, 11, 13) verbunden sind.

11. Stromversorgung nach Anspruch 10, die ferner Gleichstromspannungs-Erkennungsmittel (17) zum Erkennen einer Gleichstromspannung, die an eine Last (15) ab der Dreiphasen-Wechselstromquelle (1) angelegt wird und zum Steuern eines Schaltbetriebs der hinzugefügten Kondensatorschaltmittel (33) auf der erkannten Gleichstromspannung beruhend umfasst.

12. Stromversorgung nach Anspruch 10, die ferner Eingangsstrom-Erkennungsmittel zum Erkennen eines Stroms, der auf eine Last (15) ab der Dreiphasen-Wechselstromquelle (1) angewandt wird und zum Steuern eines Schaltbetriebs der hinzugefügten Kondensatorschaltmittel (33) auf dem erkannten Eingangsstrom beruhend umfasst.

13. Stromversorgung nach Anspruch 10, die ferner Ausgangsstrom-Erkennungsmittel zum Erkennen eines Ausgangsstroms, der auf eine Last (15) ab der Dreiphasen-Wechselstromquelle (1) angewandt wird und zum Steuern eines Schaltbetriebs der hinzugefügten Kondensatorschaltmittel (33) auf dem erkannten Ausgangsstrom beruhend umfasst.

14. Stromversorgung nach einem der Ansprüche 10, die ferner Gleichstrom-Erkennungsmittel zum Erkennen eines Gleichstroms, der durch eine Last (15) fließt und zum Steuern eines Schaltbetriebs der hinzugefügten Kondensatorschaltmittel (33) auf dem erkannten Gleichstrom beruhend umfasst.

15. Stromversorgung nach einem der Ansprüche 10 bis 14, die ferner ein Vorladesteuermittel (32) zum Steuern eines Stroms umfasst, der durch die zugefügten Kondensatoren (20, 22, 24; 21, 23. 25) fließt, wenn das hinzugefügte Kondensatorschaltmittel (33) eingeschaltet ist.

16. Stromversorgung nach einem der Ansprüche 1 bis 15 , die Sättigungskennlinien derart aufweist, dass, wenn der durch die Drosselspulen fließende Strom nicht weniger als ein vorgeschriebener Wert wird, sich die Induktanz der Drosselspulen in Übere4instimmung mit dem Strom reduziert.

17. Stromversorgung nach einem der Ansprüche 1 bis 16, wobei jede der genannten Drosselspulen (2, 3, 4) eine dreiphasige Drosselspule ist, die einen Einzelkern aufweist und drei Schenkel davon und eine Spule um jeden der Schenkel herum bereitgestellt sind.

**Revendications**

1. Alimentation électrique comportant:

une source d'électricité triphasée en courant alternatif (1)
un premier pont de diodes (5) comprenant six diodes connectées à la source d'électricité triphasée en courant alternatif par l'intermédiaire de bobines d'inductance (2, 3, 4);
un deuxième pont de diodes (6) comprenant six diodes, dont la borne de sortie ($P_{OUT6}$) de polarité positive est connectée en commun à une borne de sortie ($P_{OUT5}$) de polarité positive du premier pont de diodes (5), **caractérisé en ce que** l'alimentation électrique comporte par ailleurs:

un troisième pont de diodes (7) comprenant six diodes, dont la borne de sortie ($N_{OUT7}$) de polarité négative est connectée en commun à une borne de sortie ($N_{OUT5}$) de polarité négative du premier pont de diodes (5), et dont la borne de sortie ($P_{OUT7}$) de polarité positive est connectée à une borne de sortie ($N_{OUT6}$) de polarité négative du deuxième pont de diodes (6); et au total six condensateurs (8, 10, 12 ; 9, 11, 13) dont trois condensateurs (8, 10, 12) sont connectés entre les bornes d'arrivée en courant alternatif (u1, v1, w1) du premier pont de diodes et les bornes d'arrivée en courant alternatif (u2, v2, w2) du deuxième pont de diodes respectivement, l'un des condensateurs étant prévu par phase et les trois autres condensateurs (9, 11, 13) étant connectés entre les bornes d'arrivée en courant alternatif (u1, v1, w1) du premier pont de diodes et les bornes d'arrivée en courant alternatif (u3, v3, w3) du troisième pont de diodes respectivement, l'un des condensateurs étant prévu par phase.

2. Alimentation électrique selon la revendication 1, comportant par ailleurs un premier moyen de commutation (16) qui est prévu entre les bornes d'arrivée en courant alternatif du premier pont de diodes et

**17**

les six condensateurs.

3. Alimentation électrique selon la revendication 1, comportant par ailleurs un deuxième moyen de commutation (16') qui est prévu au niveau d'une jonction entre le deuxième pont de diodes (6) et le troisième pont de diodes (7).

4. Alimentation électrique selon la revendication 3, **caractérisée en ce que** le deuxième moyen de commutation (16') est composé d'un seul dispositif semi-conducteur polaire (18) qui peut contrôler le courant qui circule seulement dans une direction.

5. Alimentation électrique selon l'une quelconque des revendications 2 à 4, comportant par ailleurs un moyen de détection de la tension continue (17) qui sert à détecter une tension continue appliquée à une charge (15) à partir de la source d'électricité triphasée en courant alternatif (1), et à contrôler une opération de commutation du premier ou du deuxième moyen de commutation (16, 16') sur la base de la tension continue détectée.

6. Alimentation électrique selon l'une quelconque des revendications 2 à 4, comportant par ailleurs un moyen de détection du courant continu à l'arrivée, qui sert à détecter un courant appliqué à une charge (15) à partir de la source d'électricité triphasée en courant alternatif (1), et à contrôler une opération de commutation du premier ou du deuxième moyen de commutation (16, 16') sur la base du courant d'arrivée détecté.

7. Alimentation électrique selon l'une quelconque des revendications 2 à 4, comportant par ailleurs un moyen de détection de la puissance de sortie, qui sert à détecter une puissance de sortie appliquée à une charge (15) à partir de la source d'électricité triphasée en courant alternatif (1), et à contrôler une opération de commutation du premier ou du deuxième moyen de commutation (16, 16') sur la base de la puissance de sortie détectée.

8. Alimentation électrique selon l'une quelconque des revendications 2 à 4, comportant par ailleurs un moyen de détection du courant continu, qui sert à détecter un courant continu qui circule à travers une charge (15), et à contrôler une opération de commutation du premier ou du deuxième moyen de commutation (16, 16') sur la base du courant continu détecté.

9. Alimentation électrique selon l'une quelconque des revendications 2 à 8, comportant par ailleurs un moyen de contrôle (19) de la pré-charge, qui sert à contrôler un courant qui circule en direction des six condensateurs lorsque le premier ou le deuxième moyen de commutation (16, 16') est mis en oeuvre.

10. Alimentation électrique selon l'une quelconque des revendications 1 à 9, comportant par ailleurs six condensateurs supplémentaires (20, 22, 24 ; 21, 23, 25) et un moyen supplémentaire de commutation (33) des condensateurs qui sert à mettre en circuit et hors circuit les condensateurs supplémentaires (20, 22, 24 ; 21, 23, 25), **caractérisée en ce que** ces condensateurs supplémentaires (20, 22, 24; 21, 23, 25) sont respectivement connectés en parallèle aux six condensateurs (8, 10, 12 ; 9, 11, 13) par l'intermédiaire du moyen supplémentaire de commutation (33) des condensateurs.

11. Alimentation électrique selon la revendication 10, comportant par ailleurs un moyen de détection de la tension continue (17) qui sert à détecter une tension continue appliquée à une charge (15) à partir de la source d'électricité triphasée en courant alternatif (1), et à contrôler une opération de commutation du moyen supplémentaire de commutation (33) des condensateurs sur la base de la tension continue détectée.

12. Alimentation électrique selon la revendication 10, comportant par ailleurs un moyen de détection du courant à l'arrivée, qui sert à détecter un courant appliqué à une charge (15) à partir de la source d'électricité triphasée en courant alternatif (1), et à contrôler une opération de commutation du moyen supplémentaire de commutation (33) des condensateurs sur la base du courant d'arrivée détecté.

13. Alimentation électrique selon la revendication 10, comportant par ailleurs un moyen de détection de la puissance de sortie qui sert à détecter une puissance de sortie appliquée à une charge (15) à partir de la source d'électricité triphasée en courant alternatif (1), et à contrôler une opération de commutation du moyen supplémentaire de commutation (33) des condensateurs sur la base de la puissance de sortie détectée

14. Alimentation électrique selon la revendication 10, comportant par ailleurs un moyen de détection du courant continu qui sert à détecter un courant continu qui circule à travers une charge (15), et à contrôler une opération de commutation du moyen supplémentaire de commutation (33) des condensateurs sur la base du courant continu détecté.

15. Alimentation électrique selon l'une quelconque des revendications 10 à 14, comportant par ailleurs un moyen de contrôle de la pré-charge (32) qui sert à contrôler le courant qui circule à travers les condensateurs supplémentaires (20, 22, 24 ; 21, 23, 25) lorsque le moyen de commutation (33) des condensateurs supplémentaires est mis en oeuvre.

16. Alimentation électrique selon l'une quelconque des revendications 1 à 15 dont les caractéristiques de saturation sont telles que, lorsque le courant qui circule à travers les bobines d'inductance est égal au moins à une valeur prescrite•, l'inductance des bobines d'inductance baisse conformément au courant.

17. Alimentation électrique selon l'une quelconque des revendications 1 à 16, **caractérisée en ce que** chacune des bobines d'inductance (2, 3, 4) est une bobine d'inductance triphasée à un seul noyau et à trois branchements, chaque branchement étant entouré d'une bobine.

*Fig. 1*

*Fig. 2*

Fig. 3

Fig. 4

Fig. 5

23

Fig. 6

Fig. 7

EP 1 758 233 B1

Fig. 8

Fig. 9

*Fig. 10*

EP 1 758 233 B1

Fig. 11

27

## Fig. 12

## Fig. 13

*Fig. 14*

Vu:50V/div
Iu:10A/div
2ms/div

*Fig. 15*

Fig. 16

(a)

(b)

(c)

*Fig. 17*

*Fig. 18*

Fig. 19

Fig. 20

DC VOLTAGE DETECTOR

*Fig. 21*

*Fig. 22*

*Fig. 23*

*Fig. 24*

*Fig. 25*

*Fig. 26*

*Fig. 27*

（a）（t0～tc)

（b）（tc～t1)

（c）（t1～t2)

（d）（t2～t3)

（e）（t3～t4)

*Fig. 28*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002369530 A

- US 5933336 A

**Non-patent literature cited in the description**

- A novel three-phase zero current transition and quasi-zero voltage transsision (ZCT-QZVT) inverter/rectifier with reduced stresses on devices and components. Applied Power Electronics Conference. IEEE, 06 February 2000, vol. 2, 1030-1036